# EUROPEAN PATENT SPECIFICATION

(11) **EP 1 877 927 B1**
(45) Date of publication and mention of the grant of the patent: **30.03.2011**
(21) Application number: 06743871.3
(22) Date of filing: 28.04.2006
(51) Int. Cl.: G06F 15/78, G06F 17/50, G06F 9/45

(54) **RECONFIGURABLE INSTRUCTION CELL ARRAY**
UMKONFIGURIERBARES ANWEISUNGS-ZELLEN-ARRAY
RESEAU DE CELLULES D'INSTRUCTIONS RECONFIGURABLE

(30) Priority: 28.04.2005 GB 0508589; 06.03.2006 GB 0604428
(43) Date of publication of application: 16.01.2008
(73) Proprietor: The University Court of the University of Edinburgh, Edinburgh EH8 9YL (GB)
(72) Inventor: ARSLAN, Tughrul Sati, Edinburgh EH9 2PY (GB); MILLWARD, Mark, John, Bristol BS35 2DA (GB); KHAWAM, Sami, Edinburgh EH1 2QL (GB); NOUSIAS, Ioannis, EdinbURGH EH10 6AF (GB); YI, Ying, Edinburgh EH10 4RU (GB)
(74) Representative: McBride, Peter Hill
(86) International application number: PCT/GB2006/001556
(87) International publication number: WO 2006/114642

(56) References cited:
- EP-A- 0 759 662
- US-A- 6 105 105
- BARAT F ET AL: "Low power coarse-grained reconfigurable instruction set processor" FIELD-PROGRAMMABLE LOGIC AND APPLICATIONS. 13TH INTERNATIONAL CONFERENCE, FPL 2003. PROCEEDINGS (LECTURE NOTES IN COMPUT. SCI. VOL.2778) SPRINGER-VERLAG BERLIN, GERMANY, 2003, pages 230-239, XP002391577 ISBN: 3-540-40822-3
- BARAT F ET AL: "Software pipelining for coarse-grained reconfigurable instruction set processors" DESIGN AUTOMATION CONFERENCE, 2002. PROCEEDINGS OF ASP-DAC 2002. 7TH ASIA AND SOUTH PACIFIC AND THE 15TH INTERNATIONAL CONFERENCE ON VLSI DESIGN. PROCEEDINGS. BANGALORE, INDIA 7-11 JAN. 2002, LOS ALAMITOS, CA, USA,IEEE COMPUT. SOC, US, 7 January 2002 (2002-01-07), pages 338-344, XP010588125 ISBN: 0-7695-1441-3
- MIDDHA B ET AL: "A trimaran based framework for exploring the design space of VLIW ASIPs with coarse grain functional units" 15TH. INTERNATIONAL SYMPOSIUM ON SYSTEM SYNTHESIS. ISSS. KYOTO, JAPAN, OCT. 2 - 4, 2002, INTERNATIONAL SYMPOSIUM ON SYSTEM SYNTHESIS. ISSS, NEW YORK, NY : ACM, US, 2 October 2002 (2002-10-02), pages 2-7, XP010655179 ISBN: 1-58113-576-9
- BENOIT P ET AL: "Automatic task scheduling/loop unrolling using dedicated RTR controllers in coarse grain reconfigurable architectures" PROCEEDINGS. 19TH IEEE INTERNATIONAL PARALLEL AND DISTRIBUTED PROCESSING SYMPOSIUM IEEE COMPUT. SOC LOS ALAMITOS, CA, USA, 8 April 2005 (2005-04-08), page 8 pp., XP002392782 ISBN: 0-7695-2312-9

## Description

This invention relates to computer processors and in particular to reconfigurable processors.

The need for new hardware architectures for future semiconductor devices was recognised several years ago as current architectures will not be able to cope with future requirements in data processing and throughput. Typical examples are mobile devices for next-generation networks where a high amount of audio and video data will need to be processed; this adds extra demands on the performance of processors in order to maintain a high throughput at the cost of efficiency in terms of power consumption and silicon area. The hardware also needs to provide high adaptability to upcoming and changing standards.

Re-programmability and flexibility are key factors in reducing design costs as they permit post-fabrication changes to the system. Having this flexibility programmable through a high-level program description, such as standard C/C++, is important in reducing the design-cycle and in allowing realistic implementations of big systems.

Current established solutions include Field Programmable Gate Arrays (FPGAs), Digital Signal Processors (DSPs) and Application-Specific Integrated Circuit (ASIC) architectures. However, they all suffer from drawbacks such as very high power consumption in FPGAs, high non-recurrent-engineering costs and low flexibility after fabrication in ASICs and low throughput in DSPs. Very Long Instruction Word (VLIW) DSP architectures offer advantages in parallel processing. However, they are easily restricted by the limited amount of Instruction Level Parallelism (ILP) found in typical programs. Many solutions have been proposed by the research community mainly based on the high-performance offered by reconfigurable computing in terms of flexibility and high amount of parallel processing. Even though these solutions achieve remarkable results in computing-power and flexibility, they either do not provide enough power savings or are too difficult to program.

Several architectures try to combine a RISC processor with a coarse-grain reconfigurable array like MorphoSys (H. Singh et al. "Morphosys: an integrated reconfigurable system for data-parallel and computation-intensive applications", IEEE Trans. on Comp., 49(5):465-481, May 2000) and SMeXPP (V. Baumgarte et al., "PACT XAPP-A self-reconfigurable data processing architecture", Proc., ERSA01), however these suffer from difficulties in programming the arrays due to the use of specialised custom low-level languages. They also suffer from other limitations due to the loose coupling between the conventional processors and the arrays, like difficulties in programming and large amounts of data-transfers between the array and processor. The ADRES architecture (Bingfen Mei et al., "ADRES: An Architecture with tightly coupled VLIW processor and coarse-grained reconfigurable matrix", Proc, FPL'03) closely couples the processor and reconfigurable fabric by sharing the memory and register-file, which simplifies the programming model through the use of a high-level C language. The RaPiD architecture (C. Ebeling et al, "Implementing an OFDM Receiver on the RaPiD Reconfigurable Architecture", Proc., FPL'03) can be programmed using the high-level RaPiD-C language but this language is not compatible with ANSI-C and requires manual scheduling of parallel operations. The approach in the Chameleon/Montium coprocessor (Paul M. Heysters, et al., "Balancing between Energy-Efficiency, Flexibility and Performance", Proc. ERSA'03) and in Elixent's (Bristol, UK) D-Fabrix™ is to interconnect several ALUs to build datapaths using a special C compiler so that time-consuming computations are speeded up. In the case of Elixent™, programming is achieved through Handel-C, which is more like HDL as the designer has to state the parallelism in the code.

Therefore, none of the proposed reconfigurable hardware infrastructures have become widely adopted since they do not adequately address the need to reduce cost, have a short design time, have low power consumption and high performance.

In programming environments, threads are uncorrelated, independent tasks working in "parallel", ideally on separate set of data. Throughout the execution of a multi-threaded program there is no pre-defined or known order in which the threads are executed or synchronised with each other. If a known pattern could be constructed from analysing the program then it would be questionable to why one should implement this as a multi-thread (MT) program.

A multi-threaded program relies on dynamic information which is not known at compile time. Because of that it is extremely difficult to statically analyse the execution flow of a multi-threaded program and make allocation decisions that will satisfy all active supported threads. Each thread is mapped independently without any prior knowledge of other active threads.

Traditionally multi-threading is associated with the use of completely isolated execution cores. Conventionally MT on a single core can be achieved by time-slicing the hardware resources, often referred to as temporal multithreading. With the appearance of superscalar computers, VLIW (Very Long Instruction Word) and reconfigurable computing machines, true MT is possible even in a single core. Inherently parallel architectures rely on the use of a large number of computational resources and/or interconnection resources (in the case of reconfigurable computing). Keeping these resources busy is a challenging task. Most parallel architectures suffer from low core utilisation. A known approach to reduce this effect is to employ Simultaneous Multi-Threading (SMT) in a single core. SMT usually comes as an extension to the execution flow control mechanism of a core, allowing sharing most of the core's resources by more than one concurrent thread. The realisation of SMT is very implementation dependent but a general overview for a given class of devices can be defined.

To achieve resource sharing, SMT requires some duplication of key components of the architecture. These typically include:
1. the flow control mechanism
2. the architecture state

Other than achieving higher core utilisation, SMT can hide cache latencies and fetch and decode latencies by using this time in performing useful operations. A stall condition for one thread can still leave other threads running and keeping the resources busy.

It would be desirable to use a high level language for describing the entire application running on a reconfigurable processor. However, traditional software is sequential in nature. As these high level languages have been developed for conventional CPUs, suitable scheduling algorithms are for sequential code. This poses a challenging task of taking an otherwise sequential code to extract and exploit the available parallelism. The design flow to automate the implementation of algorithms from a high abstraction level to run on reconfigurable computing system requires an efficient scheduling algorithm that can translate general purpose software code onto the highly parallel reconfigurable device thereby maximising the resource utilisation. Traditional list scheduling can not be directly used on an instruction cell based architecture because:
1) It does not deal with dependent instructions' parallelism;
2) It does not consider Register allocation in the scheduling algorithm;
3) It does not take the time effects of reconfigurable function unit and routing interconnection delay into account, which can change the data path delay in reconfigurable devices.

"Low Power Course-Grained Reconfigurable Instruction Set Processor", Barat et al. in PYK Cheung et al. (Eds.): FPL 2003, LNCS 2778, pp.230-239, 2003 presents a course-grained reconfigurable processor in which there are two distinct sections; first a reconfigurable functional unit (RFU) that is a data path array responsible for computationally data intensive operations in which the reconfigurable circuits are made, and secondly a processor core which performs the execution flow control

EP0759662A2 discloses a time multiplexed programmable logic device and in particular a field programmable gate array in which the configurable logic blocks and the programmable routing matrices are reconfigured dynamically.

It is an object of an aspect of the present invention to provide a processor having reduced cost, short design time, low power consumption and high performance.

According to a first aspect of the present invention, there is provided a coarse-grained reconfigurable processor for executing program instructions of a sequential program, the sequential program having both dependent and independent program instructions and having flow control instructions, the processor comprising:
- an interconnection network;
- a heterogeneous plurality of instruction cells each connected to the interconnection network;
- an interface to a configuration memory, the configuration memory being adapted to store configuration instructions, each configuration instruction encoding the mapping of at least one of a datapath of dependent program instructions and a datapath of independent program instructions to a circuit of the instruction cells;
- a decoding module adapted to receive the configuration instructions and further adapted to decode a received configuration instruction and configure at least some of the interconnection network and instruction cells, thereby mapping the datapath to the circuit of the instruction cells and executing the program instructions; and
- a program counter
   characterized in that
- at least one of the instruction cells is an execution flow control instruction cell adapted to manage the program counter and the interface so as to provide one of the configuration instructions to the decoding module each clock cycle;
- at least one of the configuration instructions encodes at least the mapping of a flow control instruction to a circuit of the instruction cells; and
- the decoding module is adapted to map a flow control instruction in a received configuration instruction to the execution flow control instruction cell thereby executing the flow control instruction.

Preferably the decoding module is adapted to configure at least some of the interconnection network and instruction cells by connecting at least some of the instruction cells in series through the interconnection network.

Preferably the decoding module is further adapted to receive configuration instructions encoding the mapping the datapaths of a plurality of program threads to a corresponding plurality of independent circuits of the instruction cells and further adapted to decode a configuration instruction and configure at least some of the interconnection network and instruction cells, thereby mapping the datapaths of the plurality of program threads to the corresponding plurality of circuits of the instruction cells and contemporaneously executing the program threads independently of each other.

Preferably the processor further comprises a clock module adapted to provide a clock signal having clock cycles and the decoding module is operable to decode the configuration instruction so as to configure at least some of the interconnection network and instruction cells each clock cycle.

Preferably the clock module is adapted to provide a variable clock cycle.

Preferably the clock module is adapted to provide a plurality of clock signals.

Preferably at least some of the plurality of clock signals are separately provided to a plurality of instruction cells.

Preferably the decoding module is further adapted to decode a configuration instruction so as to configure a clock signal.

Preferably the decoding module is further adapted to decode a configuration instruction so as to configure the clock cycle.

Preferably the active period of the clock signal is configured.

Preferably the duty cycle of the clock signal is configured.

Preferably, the clock module is adapted to provide an enable signal.

Preferably the enable signal is provided to an enable input of an instruction cell.

Preferably the enable signal is provided to an enable input of the execution flow control instruction cell.

Preferably the enable signal is provided to an enable input of the register instruction cell.

Preferably the enable signal is provided both to an enable input of the execution flow control instruction cell and to an enable input of the register instruction cell.

Preferably at least one of the instruction cells comprises a register instruction cell operable to change its output each clock cycle.

Preferably the processor further comprises at least one input/output port and at least one of the instruction cells comprises an input/output register instruction cell adapted to access the at least one input/output port.

Preferably the processor further comprises at least one stack and at least one of the instruction cells comprises a stack register instruction cell adapted to access the at least one stack.

Preferably at least one of the instruction cells comprises a memory instruction cell adapted to access a data memory location.

Preferably the data memory location comprises a multi-port memory location.

Preferably a pair or more of memory instruction cells are adapted to access in the same clock cycle a pair or more of data memory locations clocked at a higher frequency than the frequency of the clock cycle.

Preferably the decoding module is further adapted to decode a configuration instruction so as to configure the clock signal dependent on the configuration of a clock signal decoded from a previous configuration instruction.

Preferably at least one of the instruction cells comprises a multiplex instruction cell adapted to route data between instruction cells.

Typically at least one of the instruction cells comprises a combinatorial logic instruction cell.

Preferably the function of an instruction cell corresponds to a program instruction.

According to a second aspect of the present invention, there is provided a compiler for generating configuration instructions for the processor of the first aspect, the compiler comprising:
- a front end module adapted to receive the program instructions and to identify the datapaths of the program instructions; and
- a scheduling module adapted to map the datapaths of both dependent and independent program instructions as circuits of the instruction cells; and
- a mapping module adapted to encode the configuration of circuits of instruction cells as configuration instructions and adapted to output the configuration instructions,
wherein the scheduling module is adapted to map a flow control instruction to an execution flow control instruction cell.

Preferably the program instructions comprise assembler code output from a high level compiler.

Alternatively the program instructions comprise source code of a high level language.

Preferably the scheduling module is further adapted to schedule the program instructions according to their interdependency.

Preferably at least one of the front end module and scheduling module are further adapted to map access to registers for the storage of temporary results into interconnections between instruction cells.

Preferably the scheduling module is further adapted to map a datapath of the program instructions that will be executed in a single clock cycle.

Preferably the scheduling module is further adapted to map the datapaths of a plurality of program threads as a corresponding plurality of contemporaneous circuits of the instruction cells.

Preferably the scheduling module is further adapted to map the datapaths using operation chaining.

Preferably the scheduling module is further adapted to use operation chaining while scheduling a single clock cycle.

Preferably the scheduling module is further adapted to use operation chaining while processing each ready list of a plurality of ready lists.

Preferably the scheduling module is further adapted to map the datapaths using register allocation.

Preferably the scheduling module is further adapted to use register allocation while scheduling a single clock cycle.

Preferably the scheduling module is further adapted to use register allocation while processing each ready list of a plurality of ready lists.

Preferably the scheduling module is further adapted to map the datapaths using a plurality of scheduling algorithms.

Preferably the scheduling module is further adapted to map the datapaths by using the output selected from one of the plurality of scheduling algorithms.

According to a third aspect of the present invention, there is provided a computer program comprising program instructions, which, when run on a computer, constitute the compiler of the second aspect.

Preferably the computer program of the fourth aspect is embodied on a storage medium, stored in a computer memory or carried on an electrical or optical carrier signal.

An embodiment of the present invention will now be described with reference to the accompanying Figures, in which:
Figure 1 illustrates, in schematic form, a processor architecture in accordance with an embodiment of the present invention;
Figure 2 illustrates, in schematic form, examples of (a) island style and (b) multiplexer based interconnects between instruction cells;
Figure 3 illustrates a block of C code, VLIW DSP code and sequential assembler code (ASM);
Figure 4 illustrates, in schematic form, execution of the assembler instructions of Figure 3 according to an embodiment of the present invention;
Figure 5 illustrates, in schematic form, the programming flow according to an embodiment of the present invention;
Figure 6 illustrates, in schematic form, the design methodology according to an embodiment of the present invention;
Figure 7 illustrates, in schematic form, a comparison of instruction scheduling between VLIW DSP and that of an embodiment of the present invention;
Figure 8 illustrates, in schematic form, an advanced Reconfiguration Rate Controller unit;
Figure 9 illustrates, in schematic form, an example construction of the configuration bits for the advanced Reconfiguration Rate Controller;
Figure 10 illustrates, in schematic form, independent memory instruction cell operation;
Figure 11 illustrates, in schematic form, dependent memory instruction cell operation;
Figure 12 illustrates, in schematic form, simultaneous multi-threading of non-conflicting threads;
Figure 13 illustrates, in schematic form, simultaneous multi-threading of conflicting threads having a common interconnection resource request;
Figure 14a illustrates, in schematic form, the execution timing diagram for two threads running under a temporal multi-threading scenario;
Figure 14b illustrates, in schematic form, the execution timing diagram for two threads running under a simultaneous multi-threading scenario;
Figure 14c illustrates, in schematic form, the execution timing diagram for two threads running under a simultaneous multi-threading scenario with support for partial execution;
Figure 15 illustrates, in schematic form, a flowchart of the operation Chaining Reconfigurable Scheduling process; and
Figure 16 illustrates, in schematic form, an input data control flow graph.

An embodiment of the present invention, referred to herein as the Reconfigurable Instruction Cell Array (RICA), will be described.

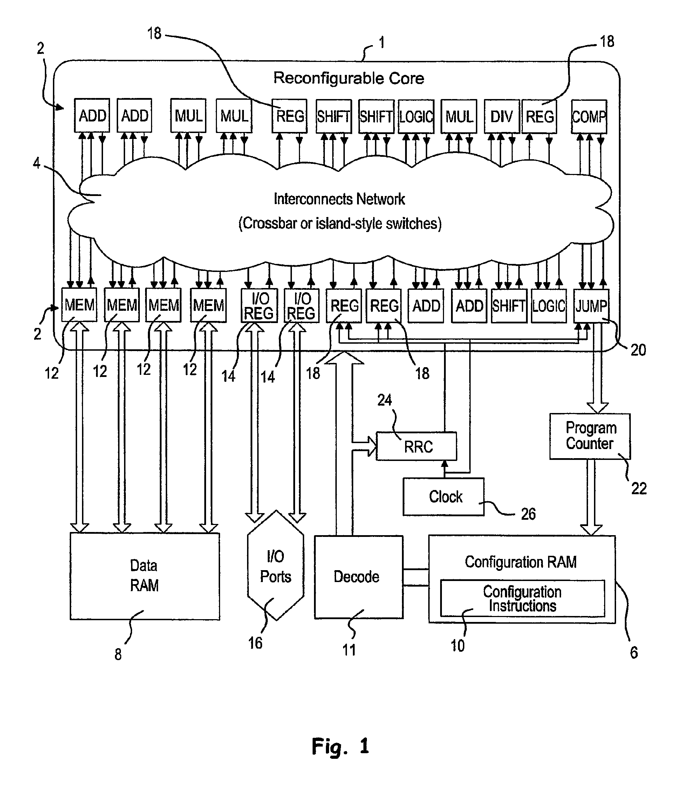

With reference to Figure 1, the core elements 1 of the RICA architecture are the Instruction Cells (ICs) 2 interconnected together through a network of programmable switches 4 to allow the creation of datapaths. In a similar way to a CPU architecture, in this embodiment, the configuration of the ICs 2 and interconnects 4 is changeable on every cycle to execute different blocks of instructions. As shown in Figure 1, RICA is similar to a Harvard Architecture CPU where the program (configuration) memory 6 is separate from the data memory 8. In the case of RICA, the processing datapath is a reconfigurable core of interconnectable ICs and the configuration memory 6 contains the configuration instructions 10 (i.e. bits) that via the decode module 11 control both the ICs and the switches inside interconnects. The interface with the data memory 8 is provided by the MEM cells 12. A number of these cells are available to allow effectively simultaneous (time multiplexed) read and write from multiple memory locations during the same clock cycle. This can be achieved by using multiple ports on the data-memory and by clocking it at a higher speed than the reconfigurable core. Furthermore, some special REG ICs 14 may be mapped to I/O ports 16 to allow interfacing with the external environment.

The characteristics of the reconfigurable RICA core 1 are fully customizable at design time and can be set according to the application's requirements. This includes options such as the bitwidth of the system, which, in this embodiment, can be set to anything between 4-bits and 64-bits, and the flexibility of the array, which is set by the choice of ICs and interconnects deployed. These parameters also affect the extent of parallelism that can be achieved and device characteristics such as area, maximum throughput and power consumption. Once a chip containing a RICA core has been fabricated, the system can be easily reprogrammed to execute any code in a similar way to a General Purpose Processor (GPP).

The IC array in the RICA is heterogeneous and each cell is limited to a small number of operations for example:
- ADD: - Addition, Subtraction
- MUL: - Multiplication (Signed and Unsigned)
- DIV: - Divisions (Signed and Unsigned)
- REG: - Registers
- I/O REG: - Register with access to external I/O ports
- MEM: - Read/Write from Data Memory
- SHIFT: - Shifting operation
- LOGIC: - Logic operation (XOR, AND, OR, etc.)
- COMP: - Data comparison
- JUMP: - Branches (and sequencer functionality)

This allows an increase in the overall cell count in the array to do more parallel computations, since the overhead of adding such small cells is merely related to the extra area occupied by the interconnects. The use of heterogeneous cells also permits tailoring the array to the application domain by adding extra ICs for frequent operations. Each IC may have one instruction mapped to it. In a similar way to assembly instructions, cells may have two inputs and one output - this allows creating a more efficient interconnects structure and reduces the number of configuration bits needed. The instruction cells developed for this embodiment support the same instruction sets found in GPPs like the OpenRISC and ARM7™ (Arm Ltd, Cambridge, UK) although instruction cells are not limited to supporting instruction sets from these processors. Hence, with this arrangement the RICA can be made binary compatible with any GPP/DSP system.

As shown above registers 18 may be defined as standard instruction cells . With this arrangement the register memory elements can be distributed in the array in such a way to operate independently, which is essential to allow a high degree of parallel processing. To program the RICA array the assembly code of a program is sliced into blocks of instructions that are executed in a single variable length clock cycle. Typically, these instructions, that were originally generated for a sequential GPP, would include access to registers for the temporary storage of intermediate results. In the case of the RICA architecture, these read/write operations are simply transformed into wires, which gives a greater efficiency in register use. By using this arrangement of registers the RICA offers a programmable degree of pipelining the operations and hence it easily permits breaking up long combinatorial computations into several variable length clock cycles. Having distributed registers enables allocation of a stack to each register, and hence providing a distributed stack scheme.

Special ICs include the execution flow control or JUMP cell 20 which is responsible for managing the program counter 22 and the interface to the configuration memory 6 in a similar way to the instruction controller found in CPUs.

Another special component is the Reconfiguration Rate Controller (RRC) 24 clock module. The RRC takes a signal from a clock generator 26 and generates an Enable signal that is routed to the enable inputs of the register ICs 18 and the execution flow control IC 20 so as to provide them with a variable clock cycle. The "clock gating" may be implementation specific and there are a number of other well-known techniques (such as asynchronous enable signals) that may be used. In usual CPUs the highest clock frequency at which the processor can be clocked is determined by the longest possible delays in the programmable datapath. For example, if the CPU has a multiplier (which takes a much longer time to execute than operations like addition), then the highest clock frequency has to provide enough time for it to operate. The problem is that if such a clock is used then the processor might end up with instruction cycles where only an adder is used but where the processor would be waiting for a longer time than needed, which limits the overall maximum throughput. In conventional CPUs this problem has been solved by making the CPU clocked at a higher frequency than the one required by the multiplier and at the same time making the multiplier pipelined, and hence requiring multiple cycles to execute.

In the RICA architecture a similar problem is encountered since the high flexibility provided allows creating data-paths with many levels of calculations and hence many possible delay requirements. If the RICA was to be clocked at the highest frequency dictated by the longest datapath, then there would be a restriction on the maximum achievable throughput.

The amount of clock cycles the RRC waits for before generating the Enable signal is configurable by the decoder 11 as part of the array's configuration instruction 10. By combining this with a clock gating technique on the registers and program counter (via the execution flow control cell) it practically achieves variable clock cycles which are programmable as part of the software.

A further special cell is a multiplexer instruction cell that provides a conditional combinatorial path. By providing a cell that contains a hardwired comparator and a multiplexer, the present invention can provide implementation of the conditional moves identified by the compiler as simple multiplexers. Furthermore, when embodied as RICA, the present invention can also provide implementation of parallel multiple execution datapaths. Such a spanning tree is useful in conditional operations to increase the level of parallelism in the execution, and hence reduce the time required to finish the operation.

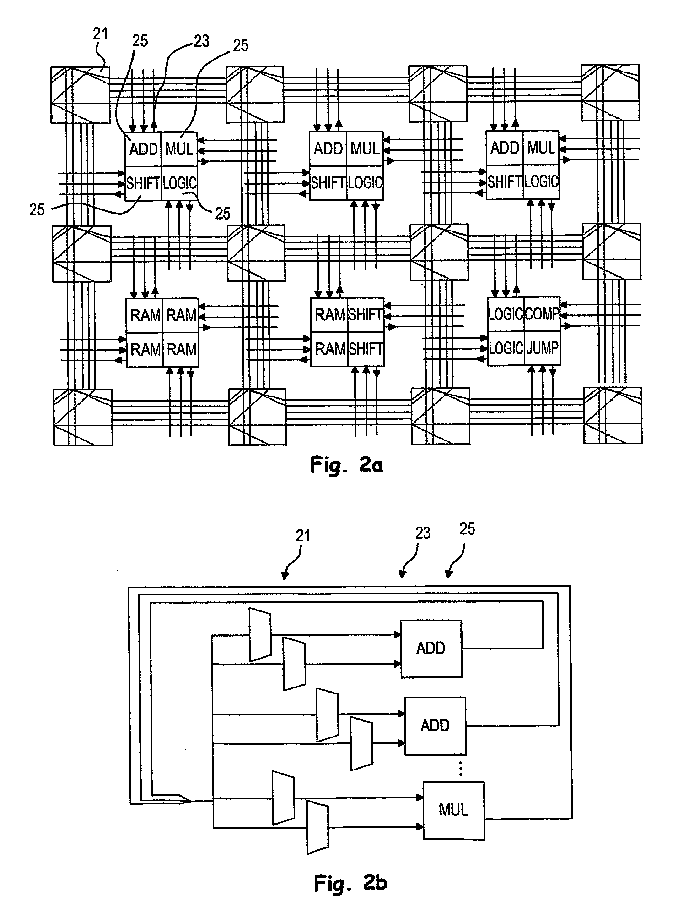

Figure 2 shows examples of (a) island style and (b) multiplexer based interconnects between instruction cells. With reference to Figure 2, the programmable switches 21 perform directional connections 23 between the output and input ports of the ICs 25. The design of the interconnects may take into account rules, for example that each IC has only one output and two inputs and that in no case will the output of an IC be looped back to its inputs (to avoid combinatorial loops). Different known solutions are available for the circuit design and topology of the switches, such as the island-style mesh found in normal FPGAs as shown in Figure 2a, or the multiplexer-based crossbar as shown in Figure 2b.

A feature of the RICA architecture is that both the programmable cells and their programmable interconnects can be dynamically reconfigured every clock cycle. The number and type of these cells are parameterisable upon application and implemented on a UMC 0.13um CMOS technology library. The reconfigurable fabric of RICA is shown in Figure 2a. The RICA architecture consists of distinct 32 bit (but parameterisable, therefore not limited to 32 bit) programmable function units, general purpose registers, memory cells and an island-style mesh reconfigurable interconnects. The basic and core elements of the RICA architecture are the 32-bit programmable ICs which can be programmed to execute one operation similar to a CPU instruction. For example, an ADD cell can be programmed as a signed/unsigned addition or subtraction function. The ICs are interconnected through an island-style mesh architecture which allows operations chaining in the datapaths.

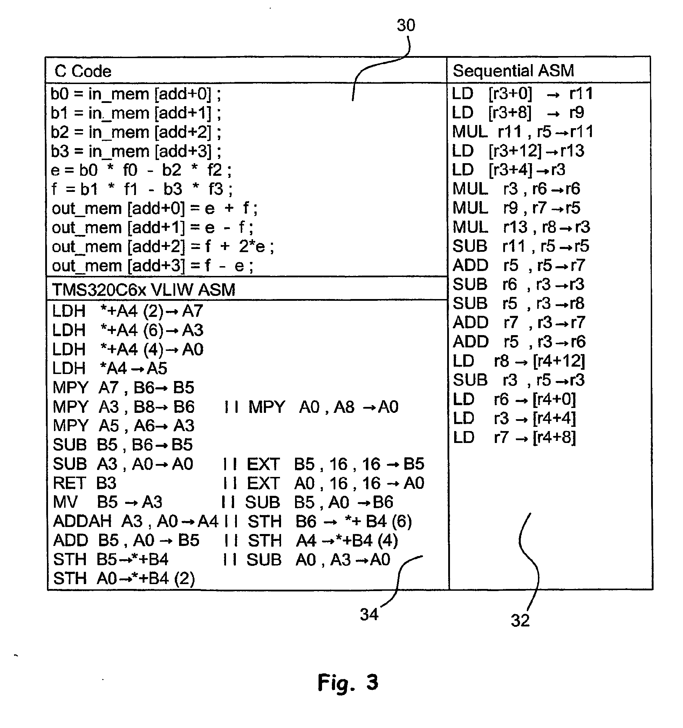

With reference to Figure 3, the sample C code 30 requires nineteen cycles 32 to execute on a typical sequential processor. However, if the same code is compiled for a VLIW DSPs, such as the TI C6203, then it would execute in fifteen cycles 34 since the VLIW architecture would try to concurrently execute up to 8 independent instructions (6 ALUs and 2 multipliers are available). If 4 simultaneous multiplications and 4 memory accesses were permitted, then the number of cycles would reduce to 8. This is still high taking into account the simplicity of the code and to what could be achieved by using hardwired solutions like FPGAs. The presence of dependent instructions prevents the compiler achieving further reduction in the number of clock cycles.

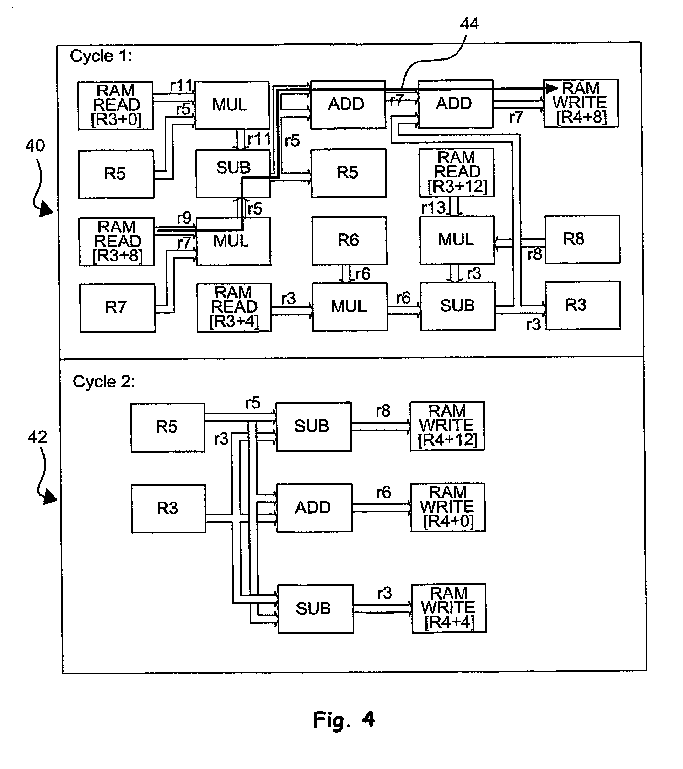

With reference to Figure 4, the configuration of instruction cells required to execute the previous C code 30 in only two cycles 40, 42 is shown, if, for example, the architecture provided 14 operational elements that can execute 4xADD, 4xRAM, 4xMUL and 2xREG simultaneously. This overcomes the limitation faced by VLIW processors and enables a higher degree of parallel processing. As shown in Cycle 1, 40, the longest delay path 44 is equivalent to two RAM accesses, one multiplication and some simple arithmetic operations. This is the case only if pseudo-simultaneous RAM accesses can be achieved within a reasonable time in a single variable clock cycle. This is not much longer than critical paths in typical DSPs when compared to how much more instructions are executed in the same cycle. Hence, an architecture that supports such an arrangement is able to achieve similar throughputs as VLIWs but at a lower power consumption, depending on the type of computation.

An aspect of the present invention provides an automatic tool flow for the hardware generation of RICA arrays, in this embodiment based on the tools available for generating domain-specific arrays. These tools take the characteristics of the required array and generate a synthesizable Register Transfer Language (RTL) definition of a RICA core that can be used in standard System On a Chip (SoC) software flow for verification, synthesis and layout.

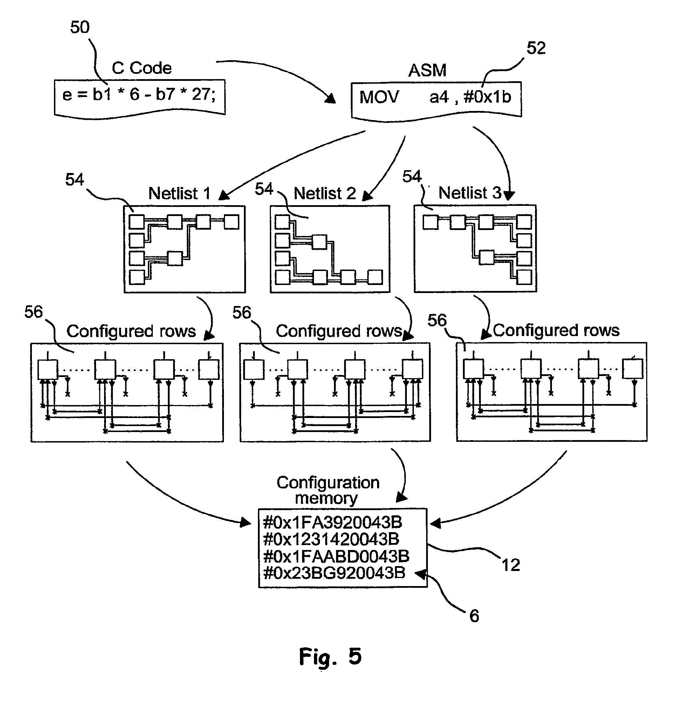

With reference to Figure 5, which depicts the programming flow according to an embodiment of the present invention, the standard GNU C Compiler (gcc) is used to compile C/C++ code 50 into assembly format 52 describing which ICs need to be used, with the supposition that instructions are executed in sequence. This assembly is processed by the RICA Compiler to create a sequence of netlists 54 each containing a block of instructions that are executed in one clock cycle. Partitioning into netlists is performed after scheduling the instructions and analysing the dependencies between them. Dependent program instructions are connected serially and independent program instructions are connected in parallel in the netlists. The scheduling algorithm takes into account IC resources, interconnects resources and timing constraints in the array; it tries to have the highest program throughput by ensuring that the maximum number of ICs is occupied and that at the same time the longest-path delay is reduced to a minimum.

Depending on the interconnects architecture, the routing part of the compiler can be based on the standard and established techniques such as the ones found in the place and route tool VPR. Furthermore, the compiler also performs crucial optimizations like removing the temporary registers generated by gcc by replacing them with simple wires. The compiler generates a sequence of configurations of instruction cells 56, that are encoded as configuration instructions 6 for storing in the configuration memory 10.

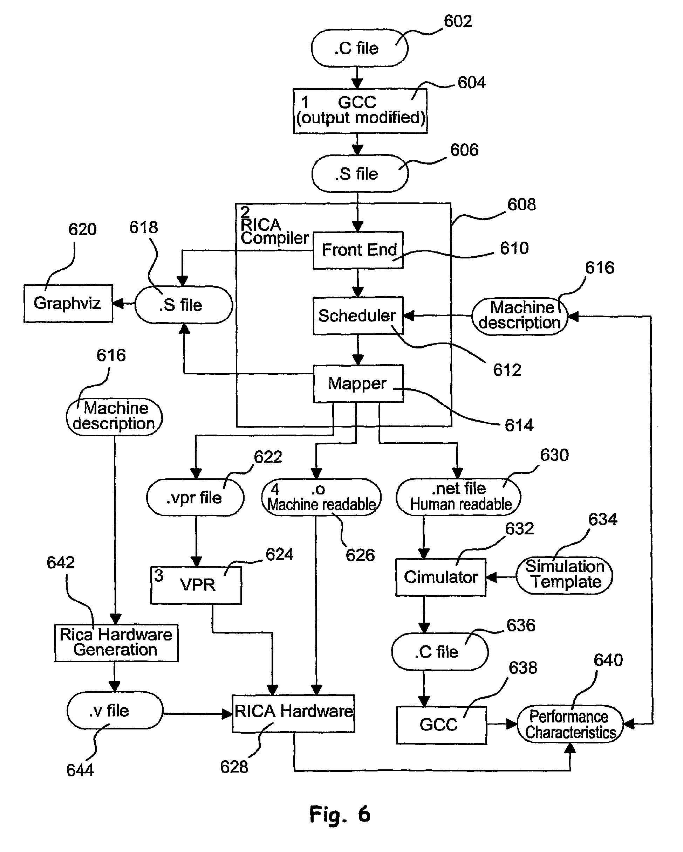

A complete tool chain is useful to allow rapid analysis of the design space for various algorithms and gain the most flexibility from of the hardware. Moreover it is advantageous for the tool chain to be suitable for integration with current design methodologies. Figure 6 depicts the design methodology of the RICA system.

There are two levels of flexibility that can be applied to the RICA reconfigurable architecture.
- Before fabrication - The high-level C/C++ code is compiled for a selected number of hardware resources. If the required performance determined by RTL simulation or through the RICA simulator is not met then the high level code can be modified or the mixture of cell resources changed. Adjusting the hardware resources allows the architecture to be tailored to the specific domain where it is to be utilised, thus saving power and resources. This stage has the highest level of flexibility.
- After fabrication - The array resources are fixed. Consequentially, if the algorithm continues to change during or after the fabrication process then the code is simply recompiled for that fixed resources. As often similar operations are required for the updated code when compared to the previous code and a large percentage of the algorithm remains unchanged. This means the generated code is still fairly optimised for the given architecture.

The programming of the RICA architecture is achieved with a collection of different tools. The use of Instruction-Cells (IC) greatly simplifies the overall effort needed to map high-level programs to the RICA architecture. Having the arrays programmable in a similar way to standard CPUs allows the reuse of existing technologies available for processors, such as optimized compilers and language parsers.

With reference to Figure 6, in Stage 1, the high-level compiler 604 takes the high-level code 602 and transforms it into an intermediate assembly language format 606. This step is performed by a standard GNU C Compiler (gcc), which compiles C/C++ code (amongst other front-ends) and transforms it into assembly format describing which ICs need to be used. The output of gcc is written with the supposition that instructions are executed in sequence, i.e. one instruction per cycle; the compiler has no knowledge about the parallelism available on the RICA. However, as is typical for a conventional processor using a machine description definition, gcc is adjusted to take into account some limitations of the target RICA, like the maximum number of available registers and the available Instruction-Cells (which define the allowed operations). The compiler automatically deals with issues like registers allocation, stack handling and prologue/epilogue definitions. Moreover, it performs all the optimisations that will be useful later on like loop unrolling and loop peeling in conjunction with loop fusion.

In Stage 2, (RICA compiler 608), all the optimizations related to the RICA architecture are performed. The RICA compiler process takes the assembly output of gcc 606 and tries to create a sequence of netlists to represent the program. Each netlist contains a block of instructions that will be executed in a single clock cycle. The partitioning into netlists is performed after scheduling the instructions and analysing the dependencies between them. Dependent instructions are cascaded in the netlist while independent ones are running in parallel. The scheduling algorithm also takes into account resources and timing constraints in the array; it tries to have the highest program throughput by ensuring that the maximum number of ICs is occupied and that at the same time the longest-path delay is reduced to a minimum. Finally, it also performs crucial optimizations like removing the temporary registers generated by gcc by replacing them with simple wires.

Thus the RICA compiler performs several stages of operations to optimise the code for the architecture and generate the configuration instruction streams. It is needed to solve the problem of identifying and extracting the parallelism in the otherwise sequential assembly code.

The distributed registers in the array allow building data paths with different pipelining options of the same circuit. The change in pipelining plan can affect the maximum throughput or power consumption. Such flexibility in pipelining is usually not available in CPU architectures (it does exists in FPGAs), which creates an opportunity of making the compiler choose the best pipelining arrangement to improve the performance of the compiled C code. This can for example allow choosing a pipelining scheme with reduced power consumption which otherwise would not be possible.

Stage 3, Place and Route, is actually begun inside the RICA compiler 608 of Stage 2 since it is part of the loop that performs partitioning and resources scheduling, as interconnect resources can affect the routability of the netlist and the timing of the longest path. However, it is described here as a separate step since we can reuse standard tools, such as the place and route tool VPR 624 to map the netlists 622 into the array 628.

Stage 4 Configuration-memory: From the mapped netlists the compiler generates the required content of the configuration memory 26, in this case the configuration RAM. Simulation and performance analysis can then be performed with conventional EDA tools or functionality of the code can also be tested using the Rica simulator.

Other tools can be plugged into the design flow to aid the design process such as the RICA compiler being able to output a format 618 suitable for GraphViz 620 that is open source graph visualisation software, to create a visual representation of the dependencies in the code and scheduled steps. As the combination and number of Cells in the RICA can vary depending on the designer's application domain and available silicon estate then a hardware generation utility 642 is used to generate the custom RTL code 644 based on the machine description.

There are several stages involved in the compilation process. The front end 610 of the RICA compiler is an instruction parser that deals with instructions such as addition, logic, div, shift, multiply. This stage performs lexical analysis of the modified GCC assembler code and extracts the function, destination register, and source registers along with the cells configuration data. Each new instruction is added to the internal pattern, creating a complete netlist of the instructions based on having infinite amount of resources (register, adders, etc). Appropriate generation of wire names, allocation of registers are performed to unravel the register reuse to ensure that all the information that the scheduler needs are kept. Due to the fixed number of registers on processors compilers utilise techniques, such as graph colouring, to reuse them. The front end section of the RICA compiler also provides a suitable mechanism for the handling of labels from the modified gcc assembler code. This is because the generated scheduled assembly code needs to deal with the labels locations for when branch or jump instructions are met.

The RICA compiler implements a reconfigurable resource scheduling algorithm (RRS) based on the concepts of operation chaining list scheduling (CLS) algorithm with additional resource and time constraints considerations. It operates to process the available time instants in increasing order (starting at zero) and to schedule as many as possible instructions at a certain instant before moving to the next.

List scheduling (LS) is the most commonly used compiler scheduling technique for basic blocks. The main idea is to schedule as many operations as possible at a certain clock cycle before moving to the next clock cycle. This procedure continues until all operations have been scheduled. The major purpose of this way is to minimise the total execution time of the operations in the DFG. Of course, the precedence relations also need to be respected in list scheduling. All operations, whose predecessors in the DFG have completed their executions at a certain cycle t, are put in the so-called ready list R[t]. The ready list contains operations that are available for scheduling. If there are sufficient unoccupied resources at cycle t for all operations in R[t], these operations can be scheduled. However, if an appropriate resource for each operation in R[t] is not available, a choice has to be made on which operations will be scheduled at cycle t and which operations will be deferred to be scheduled at a later time. This choice is normally based on heuristics, each heuristic defining a specific type of list scheduling. By computing priories in a sophisticated way, they try to schedule the most critical cells first, and to assign them to the right resource. LS usually employ a priority vector to determine what tasks to consider first.

During the scheduling process 612, the RRS scheduling algorithm uses a Ready List to be able to keep track of operations. Those operations that are available for scheduling are put in the Ready List. If there are free resources for operations in the Ready List, this operation can be scheduled after taking register allocation and routing information into consideration. However, if there are not enough free resources for operations in the Ready List, the scheduling algorithm must choose which operation to be scheduled at this cycle. The RRS scheduling algorithm selects the highest priority operation determined by mobility and parallelism in the Ready Lists as long as the operation meets resource and clock cycle constraints. Operations with higher priority have smaller mobility and higher parallelism. Mobility is defined as the length of schedule interval. Higher parallelism decides independent instruction to be scheduled first. The compiler technique called operation chaining is adopted in RRS because the available dependent parallelism present in RICA architecture. Since the scheduling and chaining of operations affects the register reuse, the scheduling algorithm also performs register assignment. The resource and time constraints are given in the machine description 616 where pre-scheduling estimated routing times are utilized and post-scheduling the routing time delays from VPR are used. The time constraints include not only the programmable computational unit delay but also the routing delays. A simple example of code before and after scheduling is now presented. The initial assembly code generated by gcc is:

| | | |
|---|---|---|
| 1 | Load | r1, X |
| 2 | Load | r2, Y |
| 3 | Mult | r3, r2, r1 |
| 4 | Load | r4, A |
| 5 | Mult | r2, r4, r1 |
| 6 | Add | r5, r2, r4 |
| 7 | Mult | r1, r2, r5 |
| 8 | Load | r3, B |
| 9 | Add | r7, r1, r3 |

It takes 9 cycles and 6 registers to implement the code. If the targeted RICA has 3 loads, 2 multipliers and 2 adds, the code generated by the scheduler targeted on RICA only takes 2 variable length clock cycles and 4 registers to finish the code. This scheduled assembly code is:

### Step 1:

| | | |
|---|---|---|
| 1 | Load | wire1, X |
| 2 | Load | wire2, Y |
| 3 | Mult | r1, wire1, wire2 |
| 4 | Load | wire3, A |
| 5 | Mult | wire4_r2, wire1, wire3 |
| 6 | Add | r3, wire4, wire3 |

### Step 2:

| | | |
|---|---|---|
| 7 | Mult | wire5, r2, r3 |
| 8 | Load | wire6, B |
| 9 | Add | r4, wire5, wire6 |

The last stage of the RICA compiler is the mapper 614, which allocates and maps the functional cells in the scheduled step's netlists to the hardware cells layout 622 and creates the appropriate bit streams of configuration instructions 626 for the given hardware architecture based on the resource allocation specifications. This configuration bit stream 626 consists of the configuration for the routing interconnects, which is generated through VPR 624 and the cell function configuration from the compiler. This output can be finally used to program the hardware or used by the simulator to analyse the system performance. The compiler also outputs a human readable form 630 of the configuration data.

The simulator 632 is an important aspect of the design environment by facilitating rapid exploration of the algorithm and resource allocation at a higher level of abstraction allows the extent of the tradeoffs to be determined before committing to time consuming RTL hardware simulation. The simulator takes the human readable .net file 630 along with simulation template file 634 containing code for each cell's functionality and performance analysis routines and generates a behaviour level C model 636 based on the RICA architecture for that given .net file. The C model is fed into a gcc compiler 638. A feedback loop exists through the performance characteristics 640 output by the gcc compiler 638 and the machine description 616 to take into account the routing delays after the netlist have been allocated to the hardware.

For each scheduled step, the simulator reorders the operations in accordance to their dependency in that step. All these reordered steps along with their connections to each other are then combined to form a set of datapaths representing the whole system. When this is compiled both the functionality can be assessed such as loops, register and memory at each step, Along with total executed steps. Other parameters gained are estimated power and area figures based on having model libraries of each instruction cell.

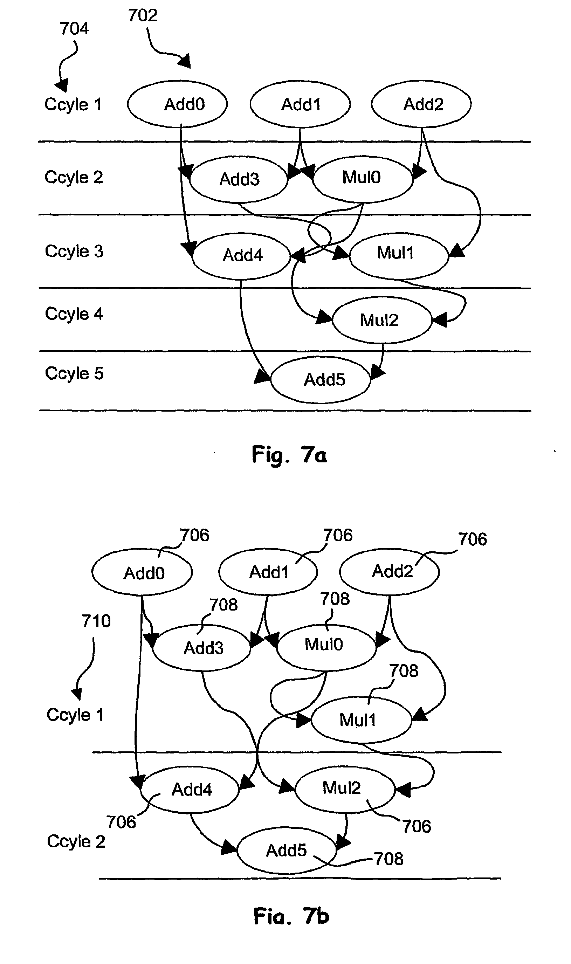

With reference to Figure 7a and 7b, The advantages of the present invention are demonstrated. RICA has the same flexibility of coarse-grain FPGA and programmability of DSP. Since it employs coarse-grained reconfigurable architecture, RICA has lower power consumption than generic fine-grained FPGA. VLIW DSP can only execute independent instructions in parallel while RICA can execute both independent and dependent assembly instructions in the same clock cycle because it allows connections in series. This is illustrated in Figures 7a and 7b where it is assumed that the hardware resources include 4 adders and 2 multipliers. With reference to Figure 7a, VLIW processors can only executed independent instructions 702 thus it takes 5 clock cycles 704. With reference to Figure 7b, RICA can perform independent 706 and dependent 708 instructions under resource constrains so it only consumes two clock cycles 710. Consequently, RICA allows higher throughput than VLIW DSP. RICA provides a higher throughput if running at the same 'frequency', or if there are the same delays of the computational elements inside both of them. RICA provides a lower maximum frequency than the VLIW DSP, hence potentially a lower maximum throughput for some control-intensive applications.

In addition, RICA adopts the advanced operation chaining technique to reduce registers and memory usage in order to reduce significantly power consumption. Operation chaining is a known technique that merges two operations one after another in extended clock cycle to reduce the register requirement for the application. Traditional high-level synthesis (HLS) is a translation process which involves taking a behavioural description into a register transfer level (RTL) structural description. Scheduling is a critical task in this process. Scheduling partitions the Control Data Flow Graph (CDFG) into time steps thereby generating a scheduled CDFG model. After the scheduling routine is performed, register allocation is used to minimise the registers in the design.

An embodiment of an aspect of the present invention will now be described that relates to an advanced Reconfiguration Rate Controller cell.

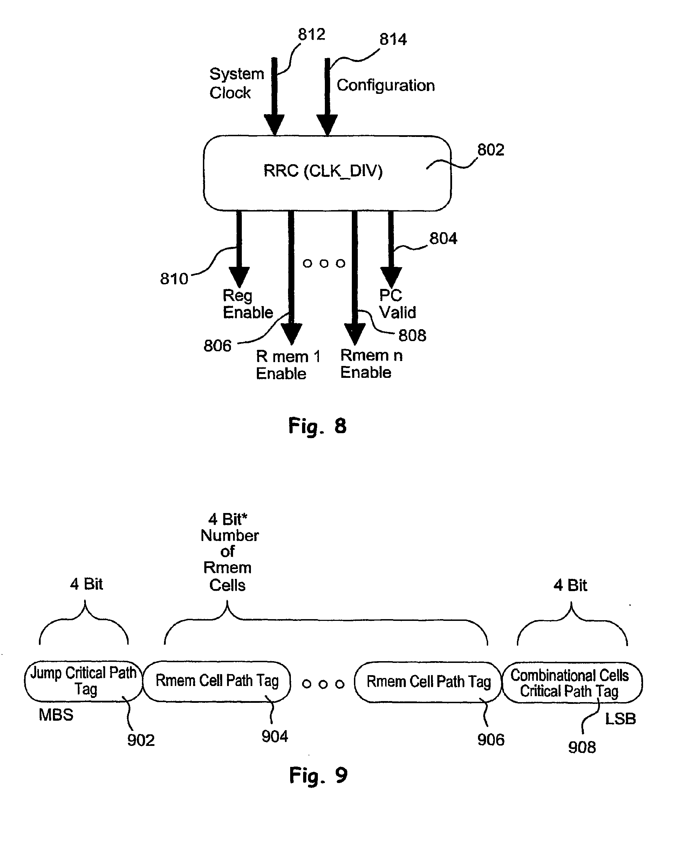

With reference to Figure 8, an advanced Reconfiguration Rate Controller (RRC) 802 generates separate Enable signals for the program counter 804, memories 806, 808 and registers 810 at the appropriate time so as to provide a plurality of clock signals. The amount of clock cycles 812 the RRC waits for before generating the Enable signals for the other parts of the architecture is programmable as part of the array's configuration instruction 814.

With reference to Figure 9, in this embodiment of the RRC instruction unit the unit's configuration bits are comprises several tag fields; the jump cell critical path tag 902, the Rmem cells path tags 904-906 and the combination cells' critical path 908 (which determines the activation of the registers).

The combinational cells' critical path tag for controlling the registers operates in the same way as described above with reference to Figure 1, i.e. the tags determines when to clock the register cells.

If the jump (execution flow control) cell is not part of the step's longest critical path it is possible to start a pre-fetch and decode of the next step before the longest critical path in the current step finishes. In order to do this extra information is required to determine when the jump cells output value is valid. Consequently, in this example four bits 902 are allocated to the RRC unit's configuration. This corresponds to how many of RICA internal clock cycles it waits for i.e. if the critical path for the jump cell is 20 ns, the clock resolution is 2 ns, the jump configuration field is set to 10.

For each read interface memory cell provided in the RICA core, there is a corresponding read memory tag (e.g. 904, 906) allocated to the RRC configuration instruction. These tags are used to provide timing management to the memory cells thus ensuring data is only read at the appropriate time period during a step's computation.

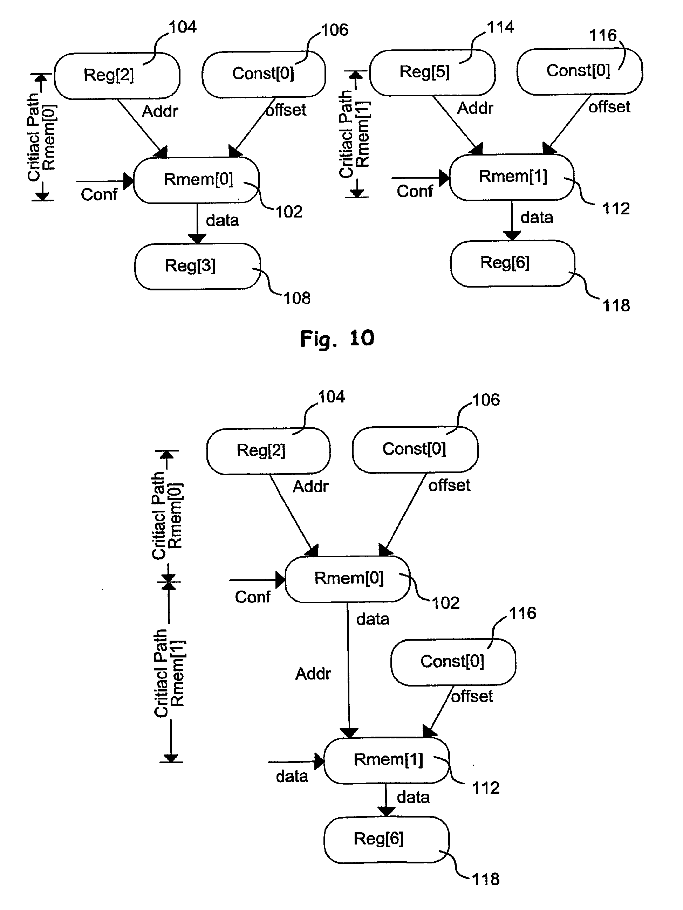

With reference to Figure 10, the first part of the Rmem tag is used to define the delay time from the start of a step to when it should send the read interface memory instruction cells' 102, 112 inputs (e.g. the address 104, 114 and offset 106, 116) to memory 108, 118.

Each of these tags also has a bit to indicate the cascading status. When the cascade bit is set high, it means that the read memory is dependent on the previous read interface memory cells access and should only begin its timing delay at the end of the previous read interface memory cells delay time.

In the case illustrated by Figure 10, both Rmem cells cascade bit are set low and both start their delay time at the same time. In the case illustrated by Figure 11, however, Rmem[1] 112 has a cascade bit set high and will only start its delay after Rmem[0] 102 has finished its delay. Furthermore, the output of Rmem[0] 102 is mapped directly into a wire to the input of Rmem[1] 112.

An embodiment of an aspect of the present invention will now be described that relates to Simultaneous Multi-Threading (SMT) on reconfigurable computing architectures.

This embodiment of the present invention provides SMT in the RICA reconfigurable computing architecture.

A set of computational units connected via a 2-dimensional multi-hop direct network is used here as an example to demonstrate the effect of simultaneous multi-threading on a single reconfigurable lattice. Other example interconnection strategies may include crossbars or segmented shared-buses.

Each thread is scheduled and mapped to the array independently to other threads that may coexist in the same program. In temporal multithreading, only one thread is active at any given time instance. In an SMT environment, these threads will occupy different parts of the array and can operate in parallel.

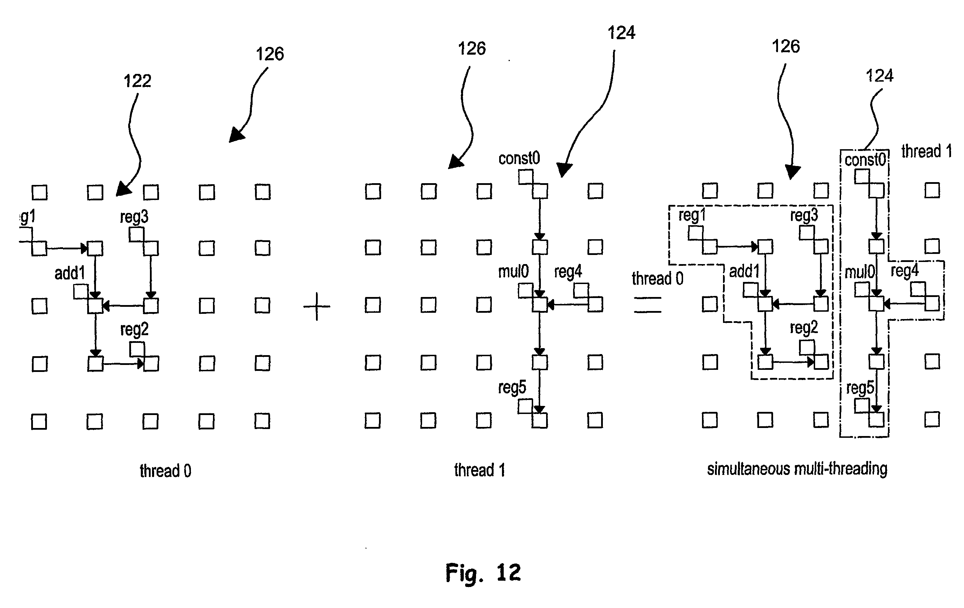

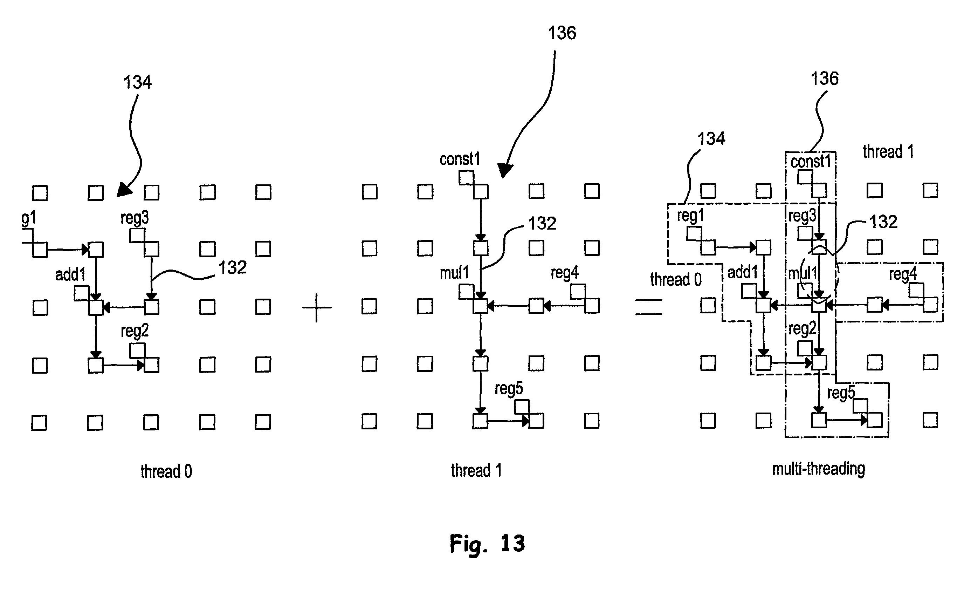

Figure 12 shows two threads 122, 124 that share the same reconfigurable lattice 126 without any conflicts. This is an ideal case which maximises the array utilisation. Attempts to enforce such thread isolation can be made at compile time by restricting one of the threads to one corner of the core while allocating the other one to the opposite side of the core. In most cases two concurrent threads would request one or more common resource at the same time. A form of interconnection resource "conflict" is shown in Figure 13. In this example, the common resource 132 will be assigned to one of the two threads 134 and 136, while the other one would need to wait.

A typical thread might have more than one independent data-path in a given configuration. Unless a strict synchronisation is imposed, each independent non-conflicting data-path can operate in parallel to the rest. This could result in a thread being executed partially, i.e. only some of its data-paths. The use of partial execution can further increase core utilisation and as a subsequence increase performance.

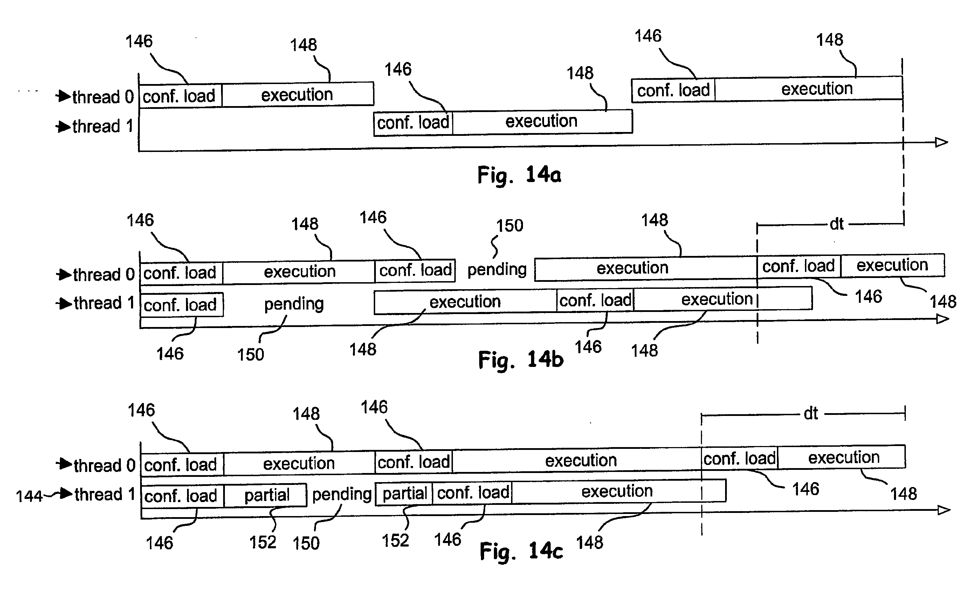

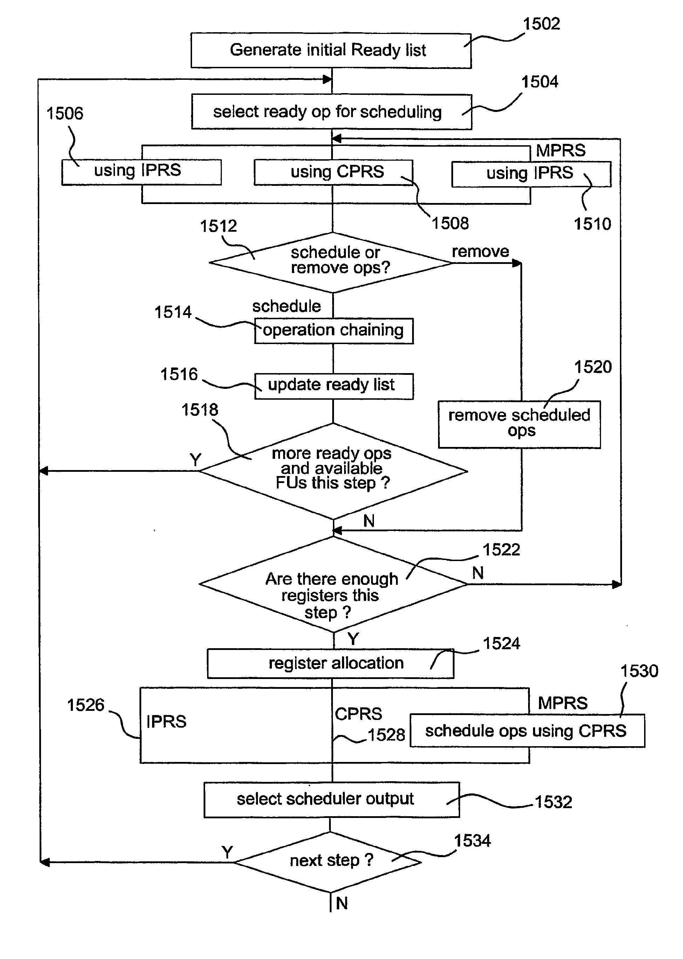

Figure 14 shows the execution time diagram for two threads, thread₀ 142 and thread₁ 144 running under various scenarios, such as temporal MT (Figure 14a), SMT (Figure 14b), and SMT (Figure 14c), with support for partial execution. In Figure 14, the configuration load 146 and execution 148 states are shown for each thread, as well as pending states 150 and partial execution 152 states.

An embodiment of the present invention will now be described that provides a new operation chaining reconfigurable scheduling algorithm (CRS) based on list scheduling, which maximizes instruction level parallelism available in distributed high performance instruction cell based reconfigurable systems. Unlike other typical scheduling methods, it uses placement and routing, register assignment and advanced operation chaining compilation techniques to generate higher performance scheduled code. Schedules using this approach achieve at least equivalent throughput to VLIW architectures but at much lower power consumption.

This embodiment of the present invention provides an efficient operation chaining scheduling algorithm targeted for reconfigurable systems. This Chaining Reconfigurable Scheduling (CRS) algorithm is based on the list scheduling algorithm and adopts the advanced operation chaining technique and considers the effects of register assignment, power consumption, placement and routing delay against the resource and time constraints. The CRS algorithm allows high program throughput and low power consumption by ensuring that the number of dependent and independent instruction cells (ICs) is maximised at each scheduled step and at the same time the total number of clock cycles of the longest-path delay is minimised.

Differing from the traditional HLS process, this embodiment of the present invention combines the scheduling, routing, instruction cells binding and register allocation together to suit the instruction cell-based architectures. This embodiment of the present invention provides a new efficient multi-objective scheduling optimisation to give both high throughput performance and low power for new reconfigurable architectures.

Traditional list scheduling can not be directly used on an instruction cell based architecture because:
1) Efficient operation chaining is required to deal with dependent instructions' parallelism;
2) Register allocation needs to be considered in the scheduling algorithm;
3) The scheduling algorithm should also take the time effects of reconfigurable function unit and routing interconnection delay into account, which can change the data path delay in reconfigurable devices.

Figure 15 shows a flowchart of an embodiment of the scheduling algorithm.

The scheduler generates 1502 a ready list and selects 1504 an operation from the list for scheduling. Three scheduling approaches are used to deal with the priority allocation mechanism. These are IPRS 1506, CPRS 1508 and MPRS 1602. In the MPRS case, IPRS is used at this step 1510 of the algorithm combined with CPRS after register allocation at step 1530.

The part of the algorithm from 1506 to 1520 is used for either scheduling or removing operations. If scheduling is being performed 1512, then operation chaining is performed 1514 and the ready list is updated 1516. If 1518 more operations are available in the ready list and functional units are available at this step, the next operation is selected 1504 from the ready list.

If at step 1512, the part of the algorithm from 1506 to 1520 is determined to be used for register removal, then the removal of scheduled operations is performed 1520 instead of steps 1514 to 1518.

If 1522 there are not enough registers at this configuration step (or clock cycle) then the removal of operations is performed by looping back to steps 1506 to 1510 and, for example, a flag is set to indicate to the decision test 1512 that register removal is to be performed.

If at step 1522 there are enough registers, then register allocation 1524 is performed, followed by no action in the case of IPRS 1526 and CPRS 1528, or followed by further scheduling of operations using CPRS in the case of MPRS at step 1530.

Using the three approaches for scheduling, it is possible to schedule the whole or sections of the code using the most optimal technique to generate the configuration bits for the target RICA architecture. The optimal scheduler output is selected 1532 before the scheduler proceeds 1534 to the next configuration step.

In order to illustrate a comparison of the CRS algorithm with simple list scheduling, a further example of the CRS algorithm is given below. It consists of a simple list scheduling algorithm with the additional new lines marked with a @. 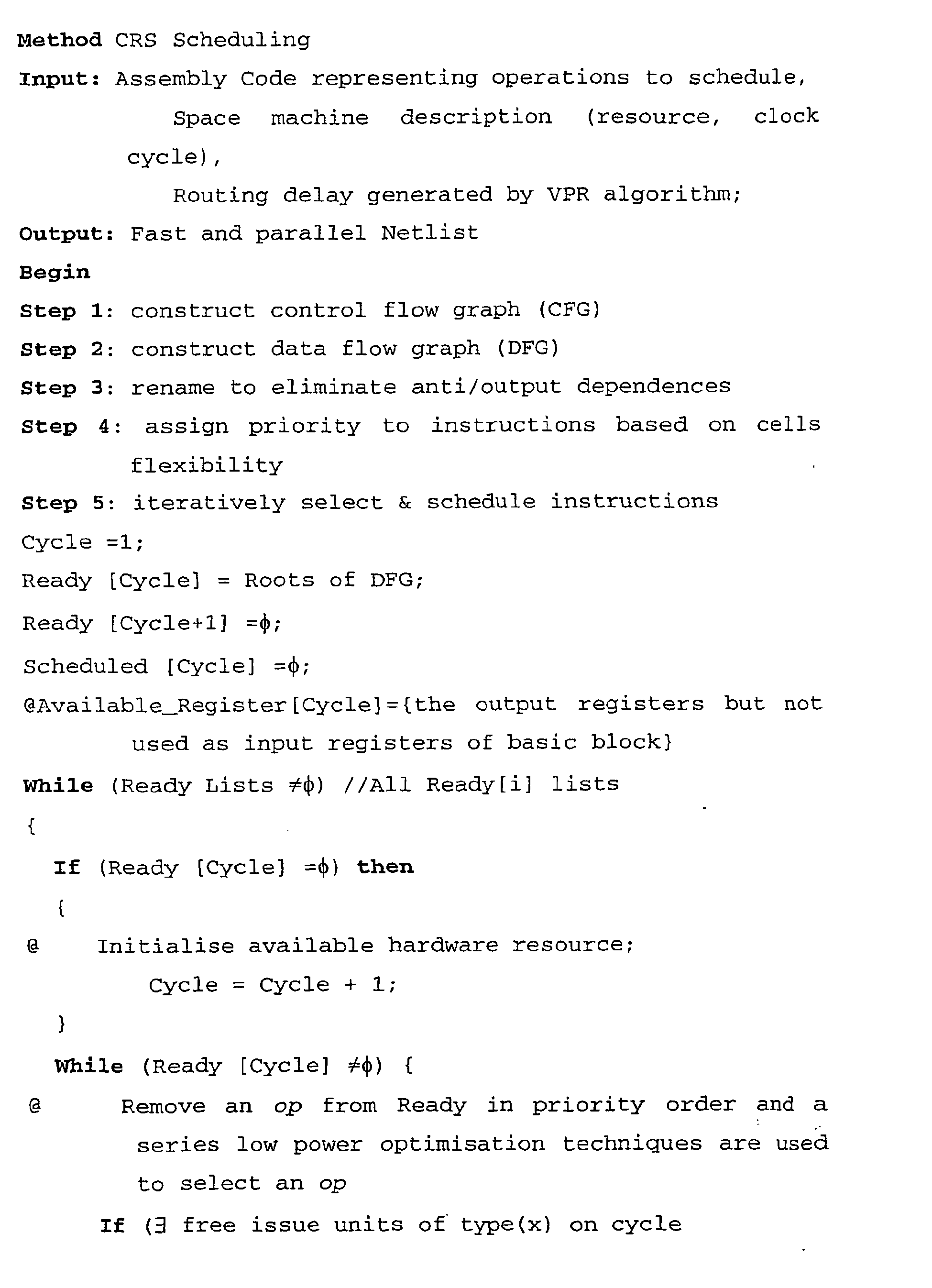 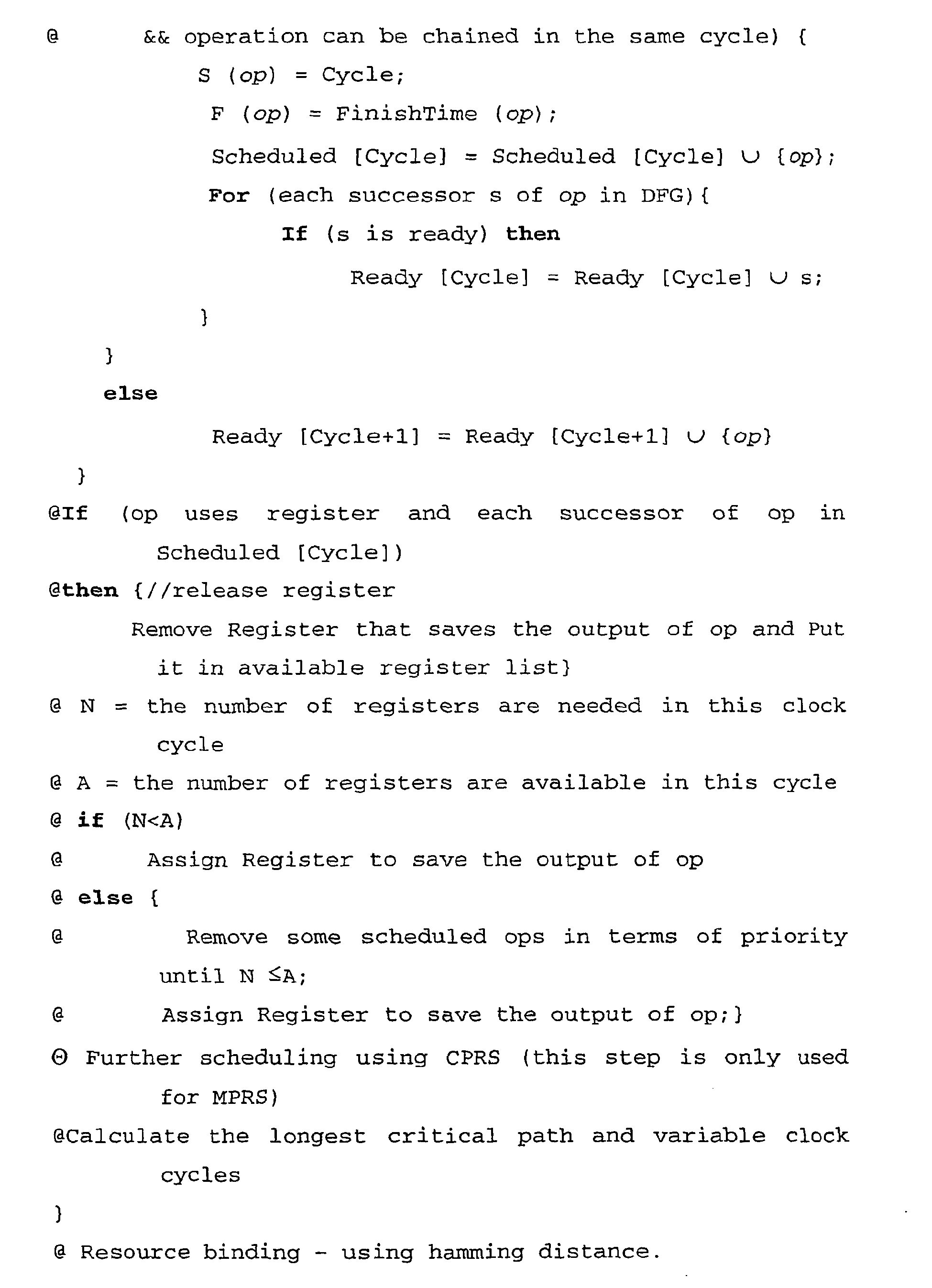 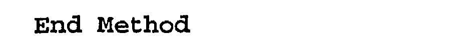 As the design input of the scheduler is the assembly code or other intermediate representation, a dependence graph (DG) is generated by removing the registers to represent instruction dependences. Since a compiler for conventional processors implements an advanced register allocation algorithm to reuse the fixed number of physical registers, DG may have false data dependence called output dependence and anti-dependence.

An operation B is true dependent on operation A if B reads a value that A produces. It is also called read after write (RAW). An operation B is anti-dependent on operation A if B writes a value to a register that is read by A, thereby destroying the value read by A. It is also called write after read (WAR). An operation B is output dependent on operation A if both A and B write the value to the same register. It is also called write after write (WAW).

Register renaming is a technique for removing the false dependencies by changing the name of the register which causes the WAR/WAW conflict. However, this technique might cause register spilling. To overcome this problem, additional load and store instructions need to be used to store the value that is expelled because of the lack of registers. This will decrease performance and increase power consumption because of increased memory accesses. Since the function units in RICA are sequential chained in the same clock cycle, the operation chaining technique reduces registers and memory usage.

If the design entry in the CRS scheduling algorithm is the compiled and scheduled assembly code, the scheduler must handle the additional complexity such as removal of unnecessary registers. Register allocation is performed after scheduling in high-level synthesis. Since the scheduling and chaining of operations affect the register allocation, the CRS scheduling algorithm also considers the register assignment.

The control flow graph is a fundamental data structure that is used to generate the correct data dependence between two basic blocks and find the instruction parallelism for different basic blocks. Firstly, the code is partitioned into a set of basic blocks, which begin at a label or after jump instruction. Basic blocks consist of CFG's nodes. After that, the CFG's edges will be added from the current block to all possible target basic blocks of the branch. The input/output ports of CFG nodes are related with the input/output registers of basic block. The input registers save the values which have been written by another basic block and will be read in this basic block. The output registers save the values which are calculated by this basic block and will be read in other basic blocks. The available registers in the CLS scheduling only include the output registers because the input registers may be used by another basic block and should keep the same value.

Three methods are adopted in the CRS scheduling algorithm, and the output code with the minimal number of clock cycles (highest throughout) or lowest power consumption is selected as scheduler's output.

The first method is called the critical-path reconfigurable scheduling (CPRS). In this context, the longest path from a node to an output node of the DFG is called its critical path. The maximum of all critical path lengths gives a lower bound value of the total time necessary to execute the remaining part of the schedule. Operations with higher priority have smaller mobility that is defined as the length of schedule interval (mobility = as late as possible (ALAP) - as soon as possible (ASAP)). Therefore, in CPRS scheduling, nodes with the greatest critical-path lengths are selected to be scheduled at cycle t.

The second method is called independent instruction priority reconfigurable scheduling (IPRS). In IPRS, nodes are selected to be scheduled at cycle t if they minimally increase the critical path of this clock cycle compared to other available nodes.

Finally, the third method called mixed priority reconfigurable scheduling (MPRS) is also used in the CRS scheduler, which combines the CPRS and IPRS algorithm. In MPRS, nodes are firstly scheduled using IPRS method, and the CPRS algorithm is executed again after register allocation (A line marked with a □ in Fig.1 is adopted only for MPRS). The CPRS algorithm will generate the minimal execution time for fixed clock system. Since the CRS algorithm adopts variable clock cycles, the CPRS scheduling method may result in longer execution time compared to the IPRS scheduling. As the CRS algorithm combines with register allocation, the finite amount of register may limit IPRS method. The MPRS scheduling may generate better scheduling than the CPRS and IPRS scheduling.

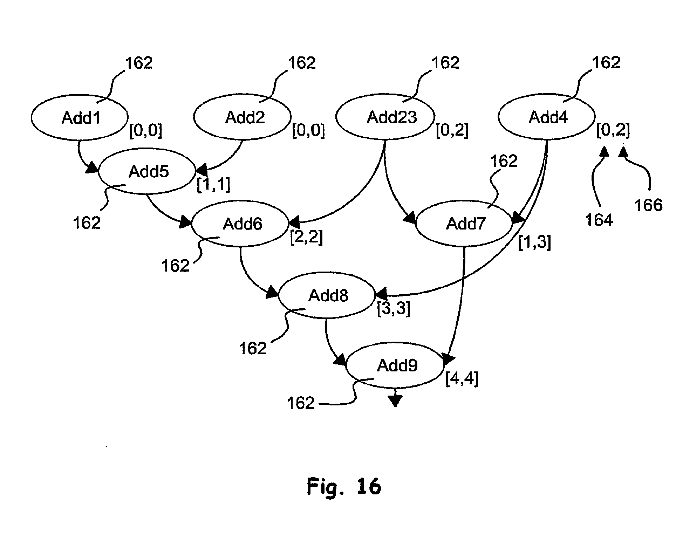

These scheduling techniques will be illustrated using the example shown in Figure 16. Assuming the architecture provides 5 operational elements that can execute 3xADD and 2xREG simultaneously and the addition is executed in one clock cycle, the ASAP and ALAP times for each adder 162 are shown in square brackets, e.g. 164, 166, in Figure 16. Table 1 below compares three different CRS algorithm to see how they impact on the number of clock cycles needed to run the function of Figure 16.

**Table 1: Comparisons of Schedulers (3 adders and 2 registers)**

| Execution | CPRS | | IPRS | | MPRS | |
|---|---|---|---|---|---|---|
| Step | Cycles | SC. | Cycles | SC. | Cycles | SC. |
| 1 | 2 | [1, 2, 5] | 1 | [1, 2] | 2 | [1, 2, 5] |
| 2 | 2 | [3, 6] | 1 | [5, 3] | 2 | [3, 6] |
| 3 | 2 | [4,8,7] | 1 | [6] | 2 | [4,8,7] |
| 4 | 1 | [9] | 2 | [4,8,7] | 1 | [9] |
| 5 | | | 1 | [9] | | |
| ET | 7 | | 6 | | 7 | |

In Tables 1 to 3, ET refers to the total clock cycles of execution times and SC refers to scheduled cells. Table 1 shows that the CPRS scheduling generates longer ET than the IPRS scheduling, and the same ET as the MPRS scheduling. However, the ET of the different algorithms is heavily dependent on machine description.. Tables 2 and 3 below give the different scheduling results based on the different machine description.

**Table 2: Comparisons of Schedulers (4 adders and 2 registers)**

| Execution Step | CPRS | | IPRS | | MPRS | |
|---|---|---|---|---|---|---|
| | Cyc | SC. | Cyc | SC. | Cyc | SC. |
| 1 | 2 | [1,2,5,3] | 1 | [1,2] | 1 | [1,2,5,3] |
| 2 | 2 | [6,4,8,7] | 2 | [5,3,6] | 1 | [6,4,8,7] |
| 3 | 1 | [9] | 3 | [4,8,7,9] | 2 | [9] |
| ET | 5 | | 6 | | 5 | |

**Table 3: Comparisons of Schedulers (5 adders and 5 registers)**

| Execution Step | CPRS | | IPRS | | MPRS | |
|---|---|---|---|---|---|---|
| | Cyc | SC. | Cyc | SC. | Cyc | SC. |
| 1 | 3 | [1,2,5,3,6] | 2 | [1,2,3,4,5] | 2 | [1,2,3,4,5] |
| 2 | 3 | [4,8,7,9] | 3 | [6,7,8,9] | 3 | [6,7,8,9] |
| ET | 6 | | 5 | | 5 | |

As shown in Tables 1 and 2, the CPRS algorithm results in longer (Table 1) or shorter (Table 2) ET than the IPRS algorithm, which is caused by the number of registers. Otherwise, the IPRS algorithm generates the shorter ET time if there are enough registers (Table 3). As the functional resources only include adders in this example, the results using the MPRS algorithm is either the same as CPRS (Table 1-2) or the same as IPRS (Table 3). However, when applied to a greater variation in resource as in a reconfigurable instruction cell based machine, it generates different results. The compiler will schedule the input code using all methods and select an appropriate output code for their requirement.

For each basic block, a data flow graph (DFG), which represents data dependence among the number of operations, is used as an input to the CRS scheduling algorithm. One limitation of running a design on processors is the number of operations that can be executed in a single cycle. To maximise the number of operations executed in a single cycle, operation chaining and variable clock cycle are added to the CRS scheduling algorithm. It reduces the total number of registers usage, decreases the power consumption by reducing memory access, and increases throughput by variable clock cycles. When chaining an operation, scheduling algorithms must consider not only the operation's impact on the critical path but also the programmable routing delay. The scheduling algorithm in the tool flow includes pre-scheduling and post-scheduling. The pre-scheduling algorithm considers the operation and estimated routing time effects on the critical path. The Netlist after pre-scheduling will be fed into a standard placement and routing tool such as VPR. The corresponding routing information given by VPR tool or other routing tools is used to provide more accurate timing information to post-scheduling algorithm in order to generate the Netlist that met design requirement. The CRS algorithm is used in the first phase for performance optimization. After that, the resource binding is generated by using Hamming distance as our power cost model to estimate the transition activity in instruction cell configuration bus. Hamming distance is the number of bit differences between two binary strings. The resource binding scheme with the minimum Hamming distance is chosen to reduce the power consumption.

Benchmark tests are conducted using different CLS scheduling algorithms (CPRS, IPRS and MPRS) and may be targeted on the reconfigurable instruction cell based architecture of the present invention to demonstrate the performance of each CLS algorithm. Table 4 below shows the execution time and energy consumption where the benchmarks are running on the architecture at the same frequency (125MHz) and the same hardware resources are used. The power consumption values for our reconfigurable architecture are obtained after post-layout simulation by the Synopsys PrimePower using UMC 0.13µm technology.

**Table 4: Comparison of Different Scheduling Methods**

| Bench-mark | Method | Execution Times (us) | Energy (uJ) consumption |
|---|---|---|---|
| 2D-DCT | CPRS | 2.352 | 0.1309 |
| | IPRS | 2.192 | 0.108 |
| | MPRS | 2.192 | 0.112 |
| FIR | CPRS | 1.998 | 0.263 |
| | IPRS | 1.98 | 0.248 |
| | MPRS | 1.98 | 0.249 |
| IIR | CPRS | 0.194 | 0.015 |
| | IPRS | 0.186 | 0.0154 |
| | MPRS | 0.188 | 0.0156 |
| Min-Error | CPRS | 9.286 | 1.59 |
| | IPRS | 9.086 | 1.519 |
| | MPRS | 9.286 | 1.529 |
| OFDM | CPRS | 42.496 | 0.7980 |
| | IPRS | 43.224 | 0.8003 |
| | MPRS | 41.6 | 0.7905 |
| Viterbi | CPRS | 501.488 | 0.2296 |
| | IPRS | 452.162 | 0.225 |
| | MPRS | 452.1 | 0.227 |
| Dhry-stone | CPRS | 283.046 | 1.004 |
| | IPRS | 281.08 | 0.878 |
| | MPRS | 282.06 | 0.925 |

From Table 4, we can see that for all the benchmarks the CPRS, IPRS and MPRS algorithms achieve slightly different execution times and power consumption values. Here, scheduled code can be selected by the end user's design criteria, e.g. power, throughput. In order to provide the high throughput, the output code with the lowest execution time is selected. The optimal solution is heavily dependent on applications; it may be generated by CPRS, IPRS or MPRS algorithm. This has been illustrated in Table 4 below. In most benchmarks, the CPRS scheduling algorithm provides less register usage but however it has higher energy consumption compared to other scheduling algorithms. From scheduling and simulation analysis, the code generated by the CPRS scheduling algorithm has longer combinational logic path than other algorithms, which results in high power consumption. However, the CPRS algorithm provides less energy consumption in some cases. Once again, energy consumption is dependent on applications. The compiler will schedule the input code using all methods and select an appropriate output code for their requirement. The CLS scheduling algorithm provides the potential lower energy consumption and a similar throughput compared to others DSP/VLIW processor

Aspects of the present invention provide an instruction cell-based reconfigurable computing architecture for low power applications. For the development of RICA, a top-down approach was adopted that revealed the key design decision for a flexible, easy to program, low power architecture. These features make RICA an architecture that inherently solves the main design requirements of modern low power devices.

By designing the silicon fabric in a similar way to reconfigurable arrays but with a closer equivalence to high level program software the present invention achieves the same high performance as coarse-grain FPGA architectures, and the same flexibility, low cost and programmability as DSPs. Although the RICA architecture is similar to a CPU, the use of an IC-based reconfigurable core as a datapath gives important advantages over DSP and VLIW, such as more support for parallel processing. The reconfigurable core can execute a block containing both independent and dependent assembly instructions in the same clock cycle, which prevents the dependent instructions from limiting the amount of ILP in the program. Other improvements over DSP architectures include reduced memory access by eliminating the centralized register file and the use of distributed memory elements to allow parallel register access.

Results show that RICA significantly outperforms FPGA based implementation while providing straightforward high-level reprogrammability. In initial performance results it also delivers up to 6 times less power consumption when compared to leading VLIW and low-power DSPs processors.

Further modifications and improvements may be added without departing prom the scope of the invention herein described.

## Claims

1. A coarse-grained reconfigurable processor for executing program instructions of a sequential program, the sequential program having both dependent and independent program instructions and having flow control instructions, the processor comprising:
- an interconnection network (4);
- a heterogeneous plurality of instruction cells (2) each connected to the interconnection network (4);
- an interface to a configuration memory (6), the configuration memory (6) being adapted to store configuration instructions, each configuration instruction encoding the mapping of at least one of a datapath of dependent program instructions and a datapath of independent program instructions to a circuit of the instruction cells (2);
- a decoding module (11) adapted to receive the configuration instructions and further adapted to decode a received configuration instruction (10) and configure at least some of the interconnection network (4) and instruction cells (2), thereby mapping the datapath to the circuit of the instruction cells (2) and executing the program instructions; and
- a program counter (22)
**characterised in that**
- at least one of the instruction cells (2) is an execution flow control instruction cell (20) adapted to manage the program counter (22) and the interface so as to provide one of the configuration instructions (10) to the decoding module (11) each clock cycle;
- at least one of the configuration instructions (10) encodes at least the mapping of a flow control instruction to a circuit of the instruction cells; and
- the decoding module (11) is adapted to map a flow control instruction in a received configuration instruction to the execution flow control instruction cell (20) thereby executing the flow control instruction.

2. The processor of claim 1 wherein the decoding module (11) is adapted to configure at least some of the interconnection network (4) and instruction cells (2) by connecting at least some of the instruction cells in series through the interconnection network (4).

3. The processor of any of claims 1 and 2 wherein the decoding module (11) is further adapted to receive configuration instructions (10) encoding the mapping the datapaths of a plurality of program threads to a corresponding plurality of independent circuits (126,124) of the instruction cells and further adapted to decode a configuration instruction (10) and configure at least some of the interconnection network (4) and instruction cells (2), thereby mapping the datapaths of the plurality of program threads to the corresponding plurality of circuits (126,124) of the instruction cells (2) and contemporaneously executing the program threads independently of each other.

4. The processor of any previous claim wherein the processor further comprises a clock module (24,26) adapted to provide a clock signal having clock cycles and the decoding module (11) is operable to decode the configuration instruction (10) so as to configure at least some of the interconnection network (4) and instruction cells (2) each clock cycle.

5. The processor of claim 4 wherein the clock module (24,26) is adapted to provide a variable clock cycle.

6. The processor of claims 4 or 5 wherein the clock module (24, 26) is adapted to provide a plurality of clock signals.

7. The processor of claim 6 wherein at least some of the plurality of clock signals are separately provided to a plurality of instruction cells.

8. The processor of any of claims 4 to 7 wherein the decoding module (11) is further adapted to decode a configuration instruction (814) so as to configure a clock signal.

9. The processor of claim 8 wherein the decoding module is further adapted to decode a configuration instruction so as to configure the clock cycle.

10. The processor of claims 8 or 9 wherein the active period of the clock signal is configured.

11. The processor of any of claims 8 to 10 wherein the duty cycle of the clock signal is configured.

12. The processor of any of claims 4 to 11 wherein the clock module (24,26) is adapted to provide an enable signal (804 to 810).

13. The processor of claim 12 wherein the enable signal (804 to 810) is provided to an enable input of an instruction cell (18, 20).

14. The processor of claim 12 wherein the enable signal (804) is provided to an enable input of the execution flow control instruction cell (20).

15. The processor of claim 12 wherein the enable signal (810) is provided to an enable input of a register instruction cell (18).

16. The processor of claim 12 wherein the enable signal is provided both to an enable input of the execution flow control instruction cell (20) and to an enable input of a register instruction cell (18).

17. The processor of any previous claim wherein at least one of the instruction cells comprises a register instruction cell (18) operable to change its output each clock cycle.

18. The processor of any previous claim wherein the processor further comprises at least one input/output port (16) and at least one of the instruction cells (2) comprises an input/output register instruction cell (14) adapted to access the at least one input/output port (16).

19. The processor of any previous claim wherein the processor further comprises at least one stack and at least one of the instruction cells (2) comprises a stack register instruction cell adapted to access the at least one stack.

20. The processor of any previous claim wherein at least one of the instruction cells (2) comprises a memory instruction cell (12) adapted to access a data memory location (8).

21. The processor of claim 20 wherein the data memory location (8) comprises a multi-port memory location.

22. The processor of any of claims 20 and 21 wherein a pair or more of memory instruction cells (12) are adapted to access in the same clock cycle a pair or more of data memory locations (8) clocked at a higher frequency than the frequency of the clock cycle.

23. The processor of any of claims 4 to 22 wherein the decoding module (11) is further adapted to decode a configuration instruction (10) so as to configure the clock signal dependent on the configuration of a clock signal decoded from a previous configuration instruction.

24. The processor of any previous claim wherein at least one of the instruction cells (2) comprises a multiplex instruction cell adapted to route data between instruction cells.

25. The processor of any previous claim wherein at least one of the instruction cells (2) comprises a combinatorial logic instruction cell.

26. The processor of any previous claim wherein the function of an instruction cell (2) corresponds to a program instruction.

27. A compiler (608) for generating configuration instructions for the processor of any previous claim, the compiler comprising:
a front end module (610) adapted to receive the program instructions and to identify the datapaths of the program instructions; and
a scheduling module (612) adapted to map the datapaths of both dependent and independent program instructions as circuits of the instruction cells (2); and
a mapping module (614) adapted to encode the configuration of circuits of instruction cells as configuration instructions (10) and adapted to output the configuration instructions (10)
**characterised in that**
the scheduling module (612) is adapted to map a flow control instruction to an execution flow control instruction cell (20).

28. The compiler (608) of claim 27 wherein the program instructions comprise assembler code (606) output from a high level compiler (604).

29. The compiler (608) of claim 27 wherein the program instructions comprise source code (602) of a high level language.

30. The compiler (608) of any of claims 27 to 29 wherein the scheduling module (612) is further adapted to schedule the program instructions according to their interdependency.

31. The compiler (608) of any of claims 27 to 30 wherein at least one of the front end module (610) and scheduling module (612) are further adapted to map access to registers (18) for the storage of temporary results into interconnections between instruction cells (2).

32. The compiler (608) of any of claims 27 to 31 wherein the scheduling module (612) is further adapted to map a datapath of the program instructions that will be executed in a single clock cycle.

33. The compiler (608) of any of claims 27 to 32 wherein the scheduling module (612) is further adapted to map the datapaths of a plurality of program threads as a corresponding plurality of contemporaneous circuits of the instruction cells.

34. The compiler (608) of any of claims 27 to 33 wherein the scheduling module (612) is further adapted to map the datapaths using operation chaining.

35. The compiler (608) of any of claims 27 to 34 wherein the scheduling module (612) is further adapted to use operation chaining while scheduling a single clock cycle.

36. The compiler (608) of any of claims 27 to 35 wherein the scheduling module (612) is further adapted to use operation chaining while processing each ready list of a plurality of ready lists.

37. The compiler (608) of any of claims 27 to 36 wherein the scheduling module (612) is further adapted to map the datapaths using register allocation.

38. The compiler (608) of claim 37 wherein the scheduling module (612) is further adapted to use register allocation while scheduling a single clock cycle.

39. The compiler (608) of any of claims 37 and 38 wherein the scheduling module (612) is further adapted to use register allocation while processing each ready list of a plurality of ready lists.

40. The compiler (608) of any of claims 27 to 39 wherein the scheduling module (612) is further adapted to map the datapaths using a plurality of scheduling algorithms.

41. The compiler (618) of claim 40 wherein the scheduling module (612) is further adapted to map the datapaths by using the output selected from one of the plurality of scheduling algorithms.

42. A computer program comprising program instructions, which, when run on a computer, constitute the compiler of any of claims 27 to 41.

43. The computer program of claim 42 embodied on a storage medium, stored in a computer memory or carried on an electrical or optical carrier signal.

## Patentansprüche

1. Ein grobkörniger rekonfigurierbarer Prozessor zum Ausführen von Programmbefehlen eines sequentiellen Programms, wobei das sequentielle Programm sowohl abhängige als auch unabhängige Programmbefehle aufweist und Flusssteuerbefehle aufweist, wobei der Prozessor Folgendes beinhaltet:
- ein Verbindungsnetzwerk (4);
- eine heterogene Vielzahl von Befehlszellen (2), die jeweils mit dem Verbindungsnetzwerk (4) verknüpft sind;
- eine Schnittstelle zu einem Konfigurationsspeicher (6), wobei der Konfigurationsspeicher (6) angepasst ist, um Konfigurationsbefehle zu speichern, wobei jeder Konfigurationsbefehl das Mapping von mindestens einem von einem Datenweg abhängiger Programmbefehle und einem Datenweg unabhängiger Programmbefehle auf eine Schaltung der Befehlszellen (2) codiert;
- ein Decodierungsmodul (11), angepasst, um die Konfigurationsbefehle zu empfangen, und ferner angepasst, um einen empfangenen Konfigurationsbefehl (10) zu decodieren und mindestens einen Teil des Verbindungsnetzwerks (4) und der Befehlszellen (2) zu konfigurieren, wodurch der Datenweg auf die Schaltung der Befehlszellen (2) gemappt wird und die Programmbefehle ausgeführt werden;
- und einen Programmschrittzähler (22);
**dadurch gekennzeichnet, dass**
- mindestens eine der Befehlszellen (2) eine Ausführungsflusssteuerbefehlszelle (20) ist, angepasst, um den Programmschrittzähler (22) und die Schnittstelle zu verwalten, um in jedem Taktzyklus dem Decodierungsmodul (11) einen der Konfigurationsbefehle (10) bereitzustellen;
- mindestens einer der Konfigurationsbefehle (10) mindestens das Mapping eines Flusssteuerbefehls auf eine Schaltung der Befehlszellen codiert und
- das Decodierungsmodul (11) angepasst ist, um einen Flusssteuerbefehl in einem empfangenen Konfigurationsbefehl auf die Ausführungsflusssteuerbefehlszelle (20) zu mappen, wodurch der Flusssteuerbefehl ausgeführt wird.

2. Prozessor gemäß Anspruch 1, wobei das Decodierungsmodul (11) angepasst ist, um mindestens einen Teil des Verbindungsnetzwerks (4) und der Befehlszellen (2) durch Verknüpfen von mindestens einem Teil der Befehlszellen in Reihe durch das Verbindungsnetzwerk (4) zu konfigurieren.

3. Prozessor gemäß einem der Ansprüche 1 und 2, wobei das Decodierungsmodul (11) ferner angepasst ist, um Konfigurationsbefehle (10) zu empfangen, die das Mapping der Datenwege einer Vielzahl von Programmthreads auf eine entsprechende Vielzahl von unabhängigen Schaltungen (126, 124) der Befehlszellen codieren, und ferner angepasst ist, um einen Konfigurationsbefehl (10) zu decodieren und mindestens einen Teil des Verbindungsnetzwerks (4) und der Befehlszellen (2) zu konfigurieren, wodurch die Datenwege von der Vielzahl von Programmthreads auf die entsprechende Vielzahl Schaltungen (126, 124) der Befehlszellen (2) gemappt und die Programmthreads unabhängig voneinander gleichzeitig ausgeführt werden.

4. Prozessor gemäß einem der vorhergehenden Ansprüche, wobei der Prozessor ferner ein Taktmodul (24, 26) beinhaltet, angepasst, um ein Taktsignal mit Taktzyklen bereitzustellen, und das Decodierungsmodul (11) betriebsfähig ist, um den Konfigurationsbefehl (10) zu decodieren, um in jedem Taktzyklus mindestens einen Teil des Verbindungsnetzwerks (4) und der Befehlszellen (2) zu konfigurieren.

5. Prozessor gemäß Anspruch 4, wobei das Taktmodul (24, 26) angepasst ist, um einen variablen Taktzyklus bereitzustellen.

6. Prozessor gemäß Anspruch 4 oder 5, wobei das Taktmodul (24, 26) angepasst ist, um eine Vielzahl von Taktsignalen bereitzustellen.

7. Prozessor gemäß Anspruch 6, wobei mindestens ein Teil der Vielzahl von Taktsignalen einer Vielzahl von Befehlszellen separat bereitgestellt wird.

8. Prozessor gemäß einem der Ansprüche 4 bis 7, wobei das Decodierungsmodul (11) ferner angepasst ist, um einen Konfigurationsbefehl (814) zu decodieren, um ein Taktsignal zu konfigurieren.

9. Prozessor gemäß Anspruch 8, wobei das Decodierungsmodul ferner angepasst ist, um einen Konfigurationsbefehl zu decodieren, um den Taktzyklus zu konfigurieren.

10. Prozessor gemäß Anspruch 8 oder 9, wobei die aktive Periode des Taktsignals konfiguriert wird.

11. Prozessor gemäß einem der Ansprüche 8 bis 10, wobei der Tastgrad des Taktsignals konfiguriert wird.

12. Prozessor gemäß einem der Ansprüche 4 bis 11, wobei das Taktmodul (24, 26) angepasst ist, um ein Freigabesignal (804 bis 810) bereitzustellen.

13. Prozessor gemäß Anspruch 12, wobei das Freigabesignal (804 bis 810) einem Freigabeeingang einer Befehlszelle (18, 20) bereitgestellt wird.

14. Prozessor gemäß Anspruch 12, wobei das Freigabesignal (804) einem Freigabeeingang der Ausführungsflusssteuerbefehlszelle (20) bereitgestellt wird.

15. Prozessor gemäß Anspruch 12, wobei das Freigabesignal (810) einem Freigabeeingang einer Registerbefehlszelle (18) bereitgestellt wird.

16. Prozessor gemäß Anspruch 12, wobei das Freigabesignal sowohl einem Freigabeeingang der Ausführungsflusssteuerbefehlszelle (20) als auch einem Freigabeeingang einer Registerbefehlszelle (18) bereitgestellt wird.

17. Prozessor gemäß einem der vorhergehenden Ansprüche, wobei mindestens eine der Befehlszellen eine Registerbefehlszelle (18) beinhaltet, betriebsfähig, um in jedem Taktzyklus ihren Ausgang zu ändern.

18. Prozessor gemäß einem der vorhergehenden Ansprüche, wobei der Prozessor ferner mindestens einen Ein-/Ausgabe-Port (16) beinhaltet und mindestens eine der Befehlszellen (2) eine Ein-/Ausgabe-Registerbefehlszelle (14) beinhaltet, angepasst, um auf den mindestens einen Ein-/Ausgabe-Port (16) zuzugreifen.

19. Prozessor gemäß einem der vorhergehenden Ansprüche, wobei der Prozessor ferner mindestens einen Stapel beinhaltet und mindestens eine der Befehlszellen (2) eine Stapelregisterbefehlszelle beinhaltet, angepasst, um auf den mindestens einen Stapel zuzugreifen.

20. Prozessor gemäß einem der vorhergehenden Ansprüche, wobei mindestens eine der Befehlszellen (2) eine Speicherbefehlszelle (12) beinhaltet, angepasst, um auf einen Datenspeicherort (8) zuzugreifen.

21. Prozessor gemäß Anspruch 20, wobei der Datenspeicherort (8) einen Mehrportspeicherort beinhaltet.

22. Prozessor gemäß einem der Ansprüche 20 und 21, wobei ein Paar oder mehr Speicherbefehlszellen (12) angepasst ist/sind, um in demselben Taktzyklus auf ein Paar oder mehr Datenspeicherorte (8), die mit einer höheren Frequenz als der Frequenz des Taktzyklus getaktet sind, zuzugreifen.

23. Prozessor gemäß einem der Ansprüche 4 bis 22, wobei das Decodierungsmodul (11) ferner angepasst ist, um einen Konfigurationsbefehl (10) zu decodieren, um das Taktsignal abhängig von der Konfiguration eines Taktsignals, das von einem vorherigen Konfigurationsbefehl decodiert wurde, zu konfigurieren.

24. Prozessor gemäß einem der vorhergehenden Ansprüche, wobei mindestens eine der Befehlszellen (2) eine Multiplexbefehlszelle beinhaltet, angepasst, um Daten zwischen Befehlszellen zu leiten.

25. Prozessor gemäß einem der vorhergehenden Ansprüche, wobei mindestens eine der Befehlszellen (2) eine Kombinationslogikbefehlszelle beinhaltet.

26. Prozessor gemäß einem der vorhergehenden Ansprüche, wobei die Funktion einer Befehlszelle (2) einem Programmbefehl entspricht.

27. Ein Compiler (608) zum Erzeugen von Konfigurationsbefehlen für den Prozessor gemäß einem der vorhergehenden Ansprüche, wobei der Compiler Folgendes beinhaltet:
ein Vorderendmodul (610), angepasst, um die Programmbefehle zu empfangen und um die Datenwege der Programmbefehle zu identifizieren; und
ein Ablaufplanungsmodul (612), angepasst, um die Datenwege sowohl von abhängigen als auch unabhängigen Programmbefehlen als Schaltungen der Befehlszellen (2) zu mappen; und
ein Mappingmodul (614), angepasst, um die Konfiguration von Schaltungen von Befehlszellen als Konfigurationsbefehle (10) zu codieren, und angepasst, um die Konfigurationsbefehle (10) auszugeben;
**dadurch gekennzeichnet, dass**
das Ablaufplanungsmodul (612) angepasst ist, um einen Flusssteuerbefehl auf eine Ausführungsflusssteuerbefehlszelle (20) zu mappen.

28. Compiler (608) gemäß Anspruch 27, wobei die Programmbefehle eine Ausgabe von Assemblercode (606) von einem High-Level-Compiler (604) beinhalten.

29. Compiler (608) gemäß Anspruch 27, wobei die Programmbefehle einen Quellcode (602) einer höheren Programmiersprache beinhalten.

30. Compiler (608) gemäß einem der Ansprüche 27 bis 29, wobei das Ablaufplanungsmodul (612) ferner angepasst ist, um die Programmbefehle gemäß ihrer Interdependenz zu planen.

31. Compiler (608) gemäß einem der Ansprüche 27 bis 30, wobei mindestens eines von dem Vorderendmodul (610) und dem Ablaufplanungsmodul (612) ferner angepasst ist, um Zugriff auf Register (18) zur Speicherung temporärer Resultate in Verbindungen zwischen Befehlszellen (2) zu mappen.

32. Compiler (608) gemäß einem der Ansprüche 27 bis 31, wobei das Ablaufplanungsmodul (612) ferner angepasst ist, um einen Datenweg der Programmbefehle, die in einem einzigen Taktzyklus ausgeführt werden, zu mappen.

33. Compiler (608) gemäß einem der Ansprüche 27 bis 32, wobei das Ablaufplanungsmodul (612) ferner angepasst ist, um die Datenwege einer Vielzahl von Programmthreads als eine entsprechende Vielzahl von gleichzeitigen Schaltungen der Befehlszellen zu mappen.

34. Compiler (608) gemäß einem der Ansprüche 27 bis 33, wobei das Ablaufplanungsmodul (612) ferner angepasst ist, um die Datenwege unter Verwendung von Operationsverkettung zu mappen.

35. Compiler (608) gemäß einem der Ansprüche 27 bis 34, wobei das Ablaufplanungsmodul (612) ferner angepasst ist, um Operationsverkettung während des Planens eines einzigen Taktzyklus zu verwenden.

36. Compiler (608) gemäß einem der Ansprüche 27 bis 35, wobei das Ablaufplanungsmodul (612) ferner angepasst ist, um Operationsverkettung während des Verarbeitens jeder Bereitliste einer Vielzahl von Bereitlisten zu verwenden.

37. Compiler (608) gemäß einem der Ansprüche 27 bis 36, wobei das Ablaufplanungsmodul (612) ferner angepasst ist, um die Datenwege unter Verwendung von Registerzuordnung zu mappen.

38. Compiler (608) gemäß Anspruch 37, wobei das Ablaufplanungsmodul (612) ferner angepasst ist, um Registerzuordnung während des Planens eines einzigen Taktzyklus zu verwenden.

39. Compiler (608) gemäß einem der Ansprüche 37 und 38, wobei das Ablaufplanungsmodul (612) ferner angepasst ist, um Registerzuordnung während des Verarbeitens jeder Bereitliste einer Vielzahl von Bereitlisten zu verwenden.

40. Compiler (608) gemäß einem der Ansprüche 27 bis 39, wobei das Ablaufplanungsmodul (612) ferner angepasst ist, um die Datenwege unter Verwendung einer Vielzahl von Ablaufplanungsalgorithmen zu mappen.

41. Compiler (618) gemäß Anspruch 40, wobei das Ablaufplanungsmodul (612) ferner angepasst ist, um die Datenwege durch Verwendung der Ausgabe, ausgewählt aus einem der Vielzahl von Ablaufplanungsalgorithmen, zu mappen.

42. Ein Computerprogramm, das Programmbefehle beinhaltet, die, wenn sie auf einem Computer ablaufen gelassen werden, den Compiler gemäß einem der Ansprüche 27 bis 41 darstellen.

43. Computerprogramm gemäß Anspruch 42, auf einem Speichermedium enthalten, in einem Computerspeicher gespeichert oder auf einem elektrischen oder optischen Trägersignal getragen.

## Revendications

1. Un processeur à gros grain reconfigurable destiné à exécuter des instructions de programme d'un programme séquentiel, le programme séquentiel ayant des instructions de programme à la fois dépendantes et indépendantes et ayant des instructions de commande de flux, le processeur comprenant :
- un réseau d'interconnexion (4) ;
- une pluralité hétérogène de cellules d'instruction (2) connectées chacune au réseau d'interconnexion (4) ;
- une interface pour une mémoire de configuration (6), la mémoire de configuration (6) étant adaptée pour stocker des instructions de configuration, chaque instruction de configuration codant le mappage d'au moins un chemin de données parmi un chemin de données d'instructions de programme dépendantes et un chemin de données d'instructions de programme indépendantes sur un circuit des cellules d'instruction (2) ;
- un module de décodage (11) adapté pour recevoir les instructions de configuration et en outre adapté pour décoder une instruction de configuration reçue (10) et configurer au moins certains éléments parmi le réseau d'interconnexion (4) et les cellules d'instruction (2), mappant de ce fait le chemin de données sur le circuit des cellules d'instruction (2) et exécutant les instructions de programme ; et
- un compteur de programme (22)
**caractérisé en ce que**
- au moins une des cellules d'instruction (2) est une cellule d'instruction de commande de flux d'exécution (20) adaptée pour gérer le compteur de programme (22) et l'interface afin de fournir une des instructions de configuration (10) au module de décodage (11) à chaque cycle d'horloge ;
- au moins une des instructions de configuration (10) code au moins le mappage d'une instruction de commande de flux sur un circuit des cellules d'instruction ; et
- le module de décodage (11) est adapté pour mapper une instruction de commande de flux dans une instruction de configuration reçue sur la cellule d'instruction de commande de flux d'exécution (20), exécutant de ce fait l'instruction de commande de flux.

2. Le processeur de la revendication 1 dans lequel le module de décodage (11) est adapté pour configurer au moins certains éléments parmi le réseau d'interconnexion (4) et les cellules d'instruction (2) en connectant au moins certaines des cellules d'instruction en série par le biais du réseau d'interconnexion (4).

3. Le processeur de n'importe lesquelles es revendications 1 et 2 dans lequel le module de décodage (11) est en outre adapté pour recevoir des instructions de configuration (10) codant le mappage des chemins de données d'une pluralité de fils de programme sur une pluralité correspondante de circuits indépendants (126, 124) des cellules d'instruction et en outre adapté pour décoder une instruction de configuration (10) et configurer au moins certains éléments parmi le réseau d'interconnexion (4) et les cellules d'instruction (2), mappant de ce fait les chemins de données de la pluralité de fils de programme sur la pluralité correspondante de circuits (126, 124) des cellules d'instruction (2) et exécutant de façon contemporaine les fils de programme indépendamment les uns des autres.

4. Le processeur de n'importe quelle revendication précédente dans lequel le processeur comprend en outre un module d'horloge (24, 26) adapté pour fournir un signal d'horloge ayant des cycles d'horloge et le module de décodage (11) est opérationnel pour décoder l'instruction de configuration (10) afin de configurer au moins certains éléments parmi le réseau d'interconnexion (4) et les cellules d'instruction (2) à chaque cycle d'horloge.

5. Le processeur de la revendication 4 dans lequel le module d'horloge (24, 26) est adapté pour fournir un cycle d'horloge variable.

6. Le processeur des revendications 4 ou 5 dans lequel le module d'horloge (24, 26) est adapté pour fournir une pluralité de signaux d'horloge.

7. Le processeur de la revendication 6 dans lequel au moins certains signaux parmi la pluralité de signaux d'horloge sont fournis séparément à une pluralité de cellules d'instruction.

8. Le processeur de n'importe lesquelles des revendications 4 à 7 dans lequel le module de décodage (11) est en outre adapté pour décoder une instruction de configuration (814) afin de configurer un signal d'horloge.

9. Le processeur de la revendication 8 dans lequel le module de décodage est en outre adapté pour décoder une instruction de configuration afin de configurer le cycle d'horloge.

10. Le processeur des revendications 8 ou 9 dans lequel la période active du signal d'horloge est configurée.

11. Le processeur de n'importe lesquelles des revendications 8 à 10 dans lequel le cycle de service du signal d'horloge est configuré.

12. Le processeur de n'importe lesquelles des revendications 4 à 11 dans lequel le module d'horloge (24, 26) est adapté pour fournir un signal de validation (804 à 810).

13. Le processeur de la revendication 12 dans lequel le signal de validation (804 à 810) est fourni à une entrée de validation d'une cellule d'instruction (18, 20).

14. Le processeur de la revendication 12 dans lequel le signal de validation (804) est fourni à une entrée de validation de la cellule d'instruction de commande de flux d'exécution (20).

15. Le processeur de la revendication 12 dans lequel le signal de validation (810) est fourni à une entrée de validation d'une cellule d'instruction de registre (18).

16. Le processeur de la revendication 12 dans lequel le signal de validation est fourni à la fois à une entrée de validation de la cellule d'instruction de commande de flux d'exécution (20) et à une entrée de validation d'une cellule d'instruction de registre (18).

17. Le processeur de n'importe quelle revendication précédente dans lequel au moins une des cellules d'instruction comprend une cellule d'instruction de registre (18) opérationnelle pour changer sa sortie à chaque cycle d'horloge.

18. Le processeur de n'importe quelle revendication précédente dans lequel le processeur comprend en outre au moins un port d'entrée / de sortie (16) et au moins une des cellules d'instruction (2) comprend une cellule d'instruction de registre d'entrée / de sortie (14) adaptée pour accéder à ce au moins un port d'entrée / de sortie (16).

19. Le processeur de n'importe quelle revendication précédente dans lequel le processeur comprend en outre au moins une pile et au moins une des cellules d'instruction (2) comprend une cellule d'instruction de registre de pile adaptée pour accéder à cette au moins une pile.

20. Le processeur de n'importe quelle revendication précédente dans lequel au moins une des cellules d'instruction (2) comprend une cellule d'instruction de mémoire (12) adaptée pour accéder à un emplacement de mémoire de données (8).

21. Le processeur de la revendication 20 dans lequel l'emplacement de mémoire de données (8) comprend un emplacement de mémoire multi-port.

22. Le processeur de n'importe lesquelles des revendications 20 et 21 dans lequel une paire ou plus de cellules d'instruction de mémoire (12) sont adaptées pour accéder dans le même cycle d'horloge à une paire ou plus d'emplacements de mémoire de données (8) rythmés à une fréquence plus élevée que la fréquence du cycle d'horloge.

23. Le processeur de n'importe lesquelles des revendications 4 à 22 dans lequel le module de décodage (11) est en outre adapté pour décoder une instruction de configuration (10) afin de configurer le signal d'horloge en fonction de la configuration d'un signal d'horloge décodé d'une instruction de configuration précédente.

24. Le processeur de n'importe quelle revendication précédente dans lequel au moins une des cellules d'instruction (2) comprend une cellule d'instruction multiplex adaptée pour acheminer des données entre des cellules d'instruction.

25. Le processeur de n'importe quelle revendication précédente dans lequel au moins une des cellules d'instruction (2) comprend une cellule d'instruction de logique combinatoire.

26. Le processeur de n'importe quelle revendication précédente dans lequel la fonction d'une cellule d'instruction (2) correspond à une instruction de programme.

27. Un compilateur (608) destiné à générer des instructions de configuration pour le processeur de n'importe quelle revendication précédente, le compilateur comprenant:
un module frontal (610) adapté pour recevoir les instructions de programme et pour identifier les chemins de données des instructions de programme ; et
un module de planification (612) adapté pour mapper les chemins de données d'instructions de programme à la fois dépendantes et indépendantes en circuits des cellules d'instruction (2) ; et
un module de mappage (614) adapté pour coder la configuration de circuits de cellules d'instruction en instructions de configuration (10) et adapté pour sortir les instructions de configuration (10)
**caractérisé en ce que**
le module de planification (612) est adapté pour mapper une instruction de commande de flux sur une cellule d'instruction de commande de flux d'exécution (20).

28. Le compilateur (608) de la revendication 27 dans lequel les instructions de programme comprennent un code assembleur (606) sorti d'un compilateur haut niveau (604).

29. Le compilateur (608) de la revendication 27 dans lequel les instructions de programme comprennent un code source (602) d'un langage haut niveau.

30. Le compilateur (608) de n'importe lesquelles des revendications 27 à 29 dans lequel le module de planification (612) est en outre adapté pour planifier les instructions de programme selon leur interdépendance.

31. Le compilateur (608) de n'importe lesquelles des revendications 27 à 30 dans lequel au moins un module parmi le module frontal (610) et le module de planification (612) est en outre adapté pour mapper un accès à des registres (18) destinés au stockage de résultats temporaires dans des interconnexions entre des cellules d'instruction (2).

32. Le compilateur (608) de n'importe lesquelles des revendications 27 à 31 dans lequel le module de planification (612) est en outre adapté pour mapper un chemin de données des instructions de programme qui seront exécutées dans un cycle d'horloge unique.

33. Le compilateur (608) de n'importe lesquelles des revendications 27 à 32 dans lequel le module de planification (612) est en outre adapté pour mapper les chemins de données d'une pluralité de fils de programme en une pluralité correspondante de circuits contemporains des cellules d'instruction.

34. Le compilateur (608) de n'importe lesquelles des revendications 27 à 33 dans lequel le module de planification (612) est en outre adapté pour mapper les chemins de données à l'aide d'un chaînage d'opérations.

35. Le compilateur (608) de n'importe lesquelles des revendications 27 à 34 dans lequel le module de planification (612) est en outre adapté pour utiliser un chaînage d'opérations tout en planifiant un cycle d'horloge unique.

36. Le compilateur (608) de n'importe lesquelles des revendications 27 à 35 dans lequel le module de planification (612) est en outre adapté pour utiliser un chaînage d'opérations tout en traitant chaque liste prête parmi une pluralité de listes prêtes.

37. Le compilateur (608) de n'importe lesquelles des revendications 27 à 36 dans lequel le module de planification (612) est en outre adapté pour mapper les chemins de données à l'aide d'une allocation de registres.

38. Le compilateur (608) de la revendication 37 dans lequel le module de planification (612) est en outre adapté pour utiliser une allocation de registres tout en planifiant un cycle d'horloge unique.

39. Le compilateur (608) de n'importe lesquelles des revendications 37 et 38 dans lequel le module de planification (612) est en outre adapté pour utiliser une allocation de registres tout en traitant chaque liste prête parmi une pluralité de listes prêtes.

40. Le compilateur (608) de n'importe lesquelles des revendications 27 à 39 dans lequel le module de planification (612) est en outre adapté pour mapper les chemins de données à l'aide d'une pluralité d'algorithmes de planification.

41. Le compilateur (618) de la revendication 40 dans lequel le module de planification (612) est en outre adapté pour mapper les chemins de données en utilisant la sortie sélectionnée d'un algorithme parmi la pluralité d'algorithmes de planification.

42. Un programme informatique comprenant des instructions de programme, lesquelles, lorsqu'elles sont passées sur un ordinateur, constituent le compilateur de n'importe lesquelles des revendications 27 à 41.

43. Le programme informatique de la revendication 42 mis en oeuvre sur un support de stockage, stocké dans une mémoire informatique ou porté sur un signal porteur électrique ou optique.
